(19) **Europäisches Patentamt**
**European Patent Office**
**Office européen des brevets**

(11) **EP 4 210 897 B1**

(12) **EUROPEAN PATENT SPECIFICATION**

(45) Date of publication and mention
of the grant of the patent:
**07.08.2024 Bulletin 2024/32**

(51) International Patent Classification (IPC):
**B23K 26/53** *(2014.01)* **B23K 26/0622** *(2014.01)*
**B23K 26/06** *(2014.01)* **C03B 33/02** *(2006.01)*
**B23K 26/00** *(2014.01)* **B23K 26/067** *(2006.01)*
**B23K 26/073** *(2006.01)*

(21) Application number: **21766770.8**

(22) Date of filing: **17.08.2021**

(52) Cooperative Patent Classification (CPC):
**C03B 33/0222; B23K 26/0006; B23K 26/0624;**
**B23K 26/0652; B23K 26/067; B23K 26/073;**
**B23K 26/0734; B23K 26/53**

(86) International application number:
**PCT/US2021/046210**

(87) International publication number:
**WO 2022/055670 (17.03.2022 Gazette 2022/11)**

(54) **METHODS FOR HIGH ANGLE LASER PROCESSING OF TRANSPARENT WORKPIECES**

VERFAHREN ZUR HOCHWINKELLASERBEARBEITUNG TRANSPARENTER WERKSTÜCKE

PROCÉDÉS POUR UN TRAITEMENT LASER À GRAND ANGLE DE PIÈCES TRANSPARENTES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.09.2020 US 202063076031 P**

(43) Date of publication of application:
**19.07.2023 Bulletin 2023/29**

(73) Proprietor: **Corning Incorporated**
**Corning, New York 14831 (US)**

(72) Inventors:
• **GAJ, Michael Peter**
**Horseheads, New York 14845 (US)**
• **PIECH, Garrett Andrew**
**Corning, New York 14830 (US)**
• **RUFFIN, Alranzo Boh**
**Painted Post, New York 14870 (US)**
• **SANSON, Mark Christian**
**Macedon, New York 14502 (US)**
• **WESTCOTT, Mark Ranney**
**Rochester, New York 14620-2517 (US)**

(74) Representative: **Sturm, Christoph**
**Patentanwälte Sturm Weilnau Franke**
**Partnerschaft mbB**
**Unter den Eichen 5 (Haus C-Süd)**
**65195 Wiesbaden (DE)**

(56) References cited:
**US-A1- 2018 134 604    US-B2- 10 730 783**

EP 4 210 897 B1

**Description**

This Application claims priority under 35 USC §119(e) from U.S. Provisional Patent Application Serial Number 63/076,031 filed on September 9, 2020.

**BACKGROUND**

*Field*

The present specification generally relates to apparatuses and methods for laser processing transparent workpieces, and more particularly, to laser beams comprising laser beam focal lines that are quasi-non-diffracting when refracted into a transparent workpiece at a high angle.

*Technical Background*

The area of laser processing of materials encompasses a wide variety of applications that involve cutting, drilling, milling, welding, melting, etc. of different types of materials. Among these processes, one that is of particular interest is cutting or separating different types of transparent substrates in a process that may be utilized in the production of materials such as glass, sapphire, or fused silica for thin film transistors (TFT) or display materials for electronic devices.

From process development and cost perspectives there are many opportunities for improvement in cutting and separating glass substrates. It is of great interest to have a faster, cleaner, cheaper, more repeatable, and more reliable method of separating glass substrates than what is currently practiced in the market. Many methods of separating glass substrates result in square separated edges that are prone to breakage and are often processed to have bevels or to be rounded to minimize the chance of breakage. Currently, the non-square edges are often accomplished using mechanical means, such as mechanical grinding and polishing. However, the processes generate glass dust and particles, which must be cleaned by additional process steps involving washing or chemical treatments. Accordingly, a need exists for alternative improved methods for separating glass substrates which replace the conventional edge finishing process with a particle free and high throughput process.

US 2018/0134604 A1 discloses a method for processing a transparent workpiece by directing laser pulses on the surface of the transparent workpiece. US 10 730 783 B2 shows additional prior art.

**SUMMARY**

According to a first aspect of the present disclosure, the invention provides a method for processing a transparent workpiece according to claim 1. The method according to claim 1 includes directing a laser beam oriented along a beam pathway and output by a beam source through an aspheric optical element and into an impingement surface of the transparent workpiece. The laser beam impinges the aspheric optical element radially offset from a centerline axis of the aspheric optical element by an offset distance of 30% the $1/e^2$ diameter of the laser beam or greater. The laser beam downstream the aspheric optical element has non-uniform radial intensity. The beam pathway and the transparent workpiece are tilted relative to one another such that the beam pathway has a beam pathway angle of less than 90° relative to the impingement surface at the impingement surface. Further, a portion of the laser beam directed into the transparent workpiece is a laser beam focal line and generates an induced absorption to produce a defect within the transparent workpiece, the laser beam focal line includes a wavelength $\lambda$, a spot size $w_o$, a Rayleigh range $Z_R$ that is greater than $F_D \dfrac{\pi w_o^2}{\lambda}$, where $F_D$ is a dimensionless divergence factor has a value of 10 or greater, and an internal focal line angle of less than 80° relative to the impingement surface, such that the defect has a defect angle within the transparent workpiece of less than 80° relative to the impingement surface.

A second aspect of the present disclosure includes the method of the first aspect, wherein the laser beam impinges the aspheric optical element radially offset from the centerline axis of the aspheric optical element by an offset distance of 50% the $1/e^2$ diameter of the laser beam or greater.

A third aspect of the present disclosure includes the method of the first aspect or the second aspect, wherein the laser beam impinges the aspheric optical element radially offset from the centerline axis of the aspheric optical element by an offset distance of 75% the $1/e^2$ diameter of the laser beam or greater.

A fourth aspect of the present disclosure includes the method of any of the previous aspects, wherein a portion of the laser beam including a majority of intensity of the laser beam impinges the impingement surface at one or more ray propagation angles each more than the beam pathway angle.

A fifth aspect of the present disclosure includes the method of any of the previous aspects, wherein the aspheric optical element includes a refractive axicon, a reflective axicon, negative axicon, or a diffractive optic.

A sixth aspect of the present disclosure includes the method of any of the previous aspects, wherein the internal focal line angle is from less than 80° to 50°.

A seventh aspect of the present disclosure includes the method of any of the previous aspects, wherein the internal focal line angle is from 75° to 50°.

An eighth aspect of the present disclosure includes the method of any of the previous aspects, wherein the internal focal line angle is from 70° to 50°.

A ninth aspect of the present disclosure includes the method of any of the previous aspects, wherein the internal focal line angle is 75° or less relative to the impingement surface and the transparent workpiece has a thickness of 700 $\mu$m or greater.

A tenth aspect of the present disclosure includes the method of any of the previous aspects, wherein the internal focal line angle is 65° or less relative to the impingement surface and the transparent workpiece has a thickness of 500 $\mu$m or greater.

An eleventh aspect of the present disclosure includes the method of any of the previous aspects, further including translating at least one of the transparent workpiece and the laser beam relative to each other along a contour line to form a contour having a plurality of defects.

A twelfth aspect of the present disclosure includes the method of the eleventh aspect, wherein the laser beam focal line extends from the impingement surface of the transparent workpiece to an edge surface of the transparent workpiece such that the plurality of defects each extend from the impingement surface of the transparent workpiece to the edge surface of the transparent workpiece.

A thirteenth aspect of the present disclosure includes the method of the eleventh or twelfth aspect, wherein the contour line is a curved contour line, the contour is a curved contour, and the method further includes rotating the laser beam while translating at least one of the transparent workpiece and the laser beam relative to each other along the curved contour line such that each defect of the plurality of defects is directed radially inward or radially outward relative the curved contour line.

A fourteenth aspect of the present disclosure includes the method of the thirteenth aspect, wherein the curved contour line is a closed curved contour line and the curved contour is a closed curved contour.

A fifteenth aspect of the present disclosure includes the method of any of the eleventh through fourteenth aspects, further including applying a stress to the contour to separate the transparent workpiece along the contour.

A sixteenth aspect of the present disclosure includes the method of the fifteenth aspect, wherein the stress is a thermal stress, a mechanical stress, or a combination thereof.

A seventeenth aspect of the present disclosure includes the method of any of the previous aspects, wherein the laser beam includes a pulsed laser beam output by the beam source that produces pulse bursts comprising 2 sub-pulses per pulse burst or more.

An eighteenth aspect of the present disclosure includes the method of any of the previous aspects, wherein the dimensionless divergence factor $F_D$ is a value of from 10 to 2000.

A nineteenth aspect of the present disclosure includes the method of any of the previous aspects, wherein a spacing between adjacent defects is 50 $\mu$m or less.

A twentieth aspect of the present disclosure includes the method of any of the previous aspects, wherein the transparent workpiece is an alkali aluminosilicate glass material

According to a twenty-first aspect of the present disclosure, the invention provides another method for processing a transparent workpiece according to claim 8. The method according to claim 8 includes directing a laser beam oriented along a beam pathway and output by a beam source through a multi-optic axicon assembly including a frustum optical element and a lens axicon and into an impingement surface of the transparent workpiece. The lens axicon is positioned downstream the frustum optical element. The beam pathway and the transparent workpiece are tilted relative to one another such that the beam pathway includes a beam pathway angle of less than 90° relative to the impingement surface at the impingement surface. Further, a portion of the laser beam directed into the transparent workpiece includes a laser beam focal line and generates an induced absorption to produce a defect within the transparent workpiece, the laser beam focal line including a wavelength $\lambda$,. a spot size $w_o$, a Rayleigh range $Z_R$ that is greater than $F_D \dfrac{\pi w_o^2}{\lambda}$ , where $F_D$ is a dimensionless divergence factor comprising a value of 10 or greater, and an internal focal line angle of less than 80° relative to the impingement surface, such that the defect includes a defect angle within the transparent workpiece of less than 80° relative to the impingement surface.

A twenty-second aspect of the present disclosure includes the method of the twenty-first aspect, wherein the lens axicon includes a negative spherical aberrated phase.

A twenty-third aspect of the present disclosure includes the method of the twenty-first or twenty-second aspects, wherein the lens axicon includes an input surface having a central convex reflector and an output surface having a reflective convex aperture.

A twenty-fourth aspect of the present disclosure includes the method of any of the twenty-first through the twenty-third aspect, wherein a transport optical fiber extends between the beam source and an input surface of the frustum optical element.

A twenty-fifth aspect of the present disclosure includes the method of the twenty-third aspect, wherein the central convex reflector includes an obscuration diameter and the reflective convex aperture includes a reflective ring surrounding a central aperture having an aperture diameter.

A twenty-sixth aspect of the present disclosure includes the method of any of the twenty-first through the twenty-fifth aspects, wherein the frustum optical element includes an input surface having an input surface diameter, an output surface having an output surface diameter that is greater than the input surface diameter, an outer surface extending from the input surface to the output surface, and a reflective cone extending into the output surface.

A twenty-seventh aspect of the present disclosure includes the method of the twenty-sixth aspect, wherein the reflective cone includes a reflective cone surface parallel with the outer surface of the frustum optical element.

A twenty-eighth aspect of the present disclosure includes the method of the twenty-seventh aspect, wherein the reflective cone includes a base diameter and a diameter of the laser beam upstream the frustum optical element is less than or equal to the base diameter of the reflective cone of the frustum optical element.

A twenty-ninth aspect of the present disclosure includes the method of any of the twenty-first through the twenty-eighth aspects, wherein the frustum optical element collimates the laser beam.

A thirtieth aspect of the present disclosure includes the method of any of the twenty-first through the twenty-ninth aspects, wherein the frustum optical element and the lens axicon are integrated into a monolithic lens system.

A thirty-first aspect of the present disclosure includes the method of any of the twenty-first through the twenty-ninth aspects, wherein a first alignment mechanism is coupled to the frustum optical element and configured to translate the frustum optical element along the beam pathway and a second alignment mechanism is coupled to the lens axicon and configured to translate the lens axicon along the beam pathway.

A thirty-second aspect of the present disclosure includes the method of any of the twenty-first through the thirty-first aspects, wherein the multi-optic axicon assembly further includes a split quarter waveplate positioned between the frustum optical element and the lens axicon.

A thirty-third aspect of the present disclosure includes the method of the thirty-second aspect, wherein the split quarter waveplate includes a first plate portion and a second plate portion, the first plate portion includes a first fast axis and a first slow axis and the second plate portion includes a second fast axis and a second slow axis, the first fast axis is orthogonal to the second fast axis and the second fast axis is orthogonal to the second slow axis, and a first beam portion of the laser beam is polarized into a first polarization by traversing the first plate portion and a second beam portion of the laser beam is polarized into a second polarization by traversing the second plate portion.

A thirty-fourth aspect of the present disclosure includes the method of any of the twenty-first through the thirty-third aspects, wherein the internal focal line angle is from less than 80° to 50°.

A thirty-fifth aspect of the present disclosure includes the method of any of the twenty-first through the thirty-fourth aspects, further including translating at least one of the transparent workpiece and the laser beam relative to each other along a contour line to form a contour having a plurality of defects.

A thirty-sixth aspect of the present disclosure includes the method of the thirty-fifth aspect, wherein the laser beam focal line extends from the impingement surface of the transparent workpiece to an edge surface of the transparent workpiece such that the plurality of defects each extend from the impingement surface of the transparent workpiece to the edge surface of the transparent workpiece.

A thirty-seventh aspect of the present disclosure includes the method of the thirty-fifth or thirty-sixth aspects, wherein the contour line includes a curved contour line, the contour includes a curved contour, and the method further including rotating the laser beam while translating at least one of the transparent workpiece and the laser beam relative to each other along the curved contour line such that each defect of the plurality of defects is directed radially inward or radially outward relative the curved contour line.

A thirty-eighth aspect of the present disclosure includes the method of the thirty-seventh aspect, wherein the curved contour line is a closed curved contour line and the curved contour is a closed curved contour.

A thirty-ninth aspect of the present disclosure includes the method of any of the thirty-fifth through thirty-eighth aspects, further including applying a stress to the contour to separate the transparent workpiece along the contour.

A fortieth aspect of the present disclosure includes the method of any of the twenty-first through thirty-ninth aspects, wherein the laser beam is a pulsed laser beam output by the beam source that produces pulse bursts having 2 sub-pulses per pulse burst or more.

A forty-first aspect of the present disclosure includes the method of any of the twenty-first through fortieth aspects, wherein the dimensionless divergence factor $F_D$ is a value of from 10 to 2000.

A forty-second aspect of the present disclosure includes the method of any of the twenty-first through forty-first aspects, wherein a spacing between adjacent defects is 50 $\mu$m or less.

Additional features and advantages of the processes and systems described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1A schematically depicts a perspective view of an embodiment of laser forming a contour of defects, each having a defect angle, in a transparent workpiece, according to one or more embodiments described herein;

FIG. 1B schematically depicts a side view of an embodiment of laser forming the contour of defects, each having a defect angle, in the transparent workpiece, according to one or more embodiments described herein;

FIG. 2A schematically depicts an optical assembly for laser processing a transparent workpiece including a beam source, an aspheric optical element, and a lens assembly comprising a first lens and a second lens, according to one or more embodiments described herein;

FIG. 2B schematically depicts a cross section of the laser beam of FIG. 2A at a location along the beam pathway between the first lens and the second lens, according one or more embodiments described herein;

FIG. 2C schematically depicts a cross sectional beam plot of a laser beam focal line at an impingement surface of an example transparent workpiece formed using the optical assembly of FIG. 2A, according to one or more embodiments described herein;

FIG. 2D schematically depicts a cross sectional beam plot of the laser beam focal line of FIG. 2C at a depth of 250 $\mu$m within the example transparent workpiece of FIG. 2C, according to one or more embodiments described herein;

FIG. 2E schematically depicts a cross sectional beam plot of the laser beam focal line of FIGS. 2C and 2D at a depth of 450 $\mu$m within the example transparent workpiece of FIG. 2C and 2D, according to one or more embodiments shown and described herein;

FIG. 2F schematically depicts an example angled defect formed using the laser beam focal line of FIG. 2A, according to one or more embodiments shown and described herein;

FIG. 2G depicts the intensity profile of a laser beam focal line formed using the optical assembly of FIG. 2A and directed into the transparent workpiece at a normal incidence angle, according or more embodiments shown and described herein;

FIG. 2H depicts the intensity profile of a laser beam focal line formed using the optical assembly of FIG. 2A and directed into the transparent workpiece at an oblique incidence angle, according or more embodiments shown and described herein;

FIG. 2I graphically depicts the irradiance of laser beam focal lines formed using the optical assembly of FIG. 2A as a function of propagation distance within a transparent workpiece, according to one or more embodiments shown and described herein;

FIG. 3A schematically depicts an optical assembly for laser processing a transparent workpiece including an offset beam source, an aspheric optical element, and a lens assembly, according to one or more embodiments described herein;

FIG. 3B schematically depicts a cross section of the laser beam of FIG. 3A at a location along the beam pathway between the first lens and the second lens in an embodiment in which the beam source is offset from the aspheric optical element such that the laser beam is radially offset from the aspheric optical element by a first offset distance, according one or more embodiments described herein;

FIG. 3C schematically depicts a cross section of the laser beam of FIG. 3A at a location along the beam pathway between the first lens and the second lens in an embodiment in which the beam source is offset from the aspheric optical element such that the laser beam is radially offset from the aspheric optical element by a second offset distance, which is greater than the first offset difference of FIG. 3B, according one or more embodiments described herein;

FIG. 3D schematically depicts a side view of an embodiment of laser forming the contour of angled defects in the transparent workpiece, using the optical assembly of FIG. 3A, according to one or more embodiments described herein;

FIG. 3E schematically depicts a cross sectional beam plot of the laser beam focal line of FIG. 3A at different depths of an example transparent workpiece, according to one or more embodiments described herein;

FIG. 3F schematically depicts an example angled defect formed using the laser beam focal line of FIG. 3A, according to one or more embodiments shown and described herein;

FIG. 3G depicts the intensity profile of a laser beam focal line formed using the optical assembly of FIG. 3A and directed into the transparent workpiece at a normal incidence angle, according or more embodiments shown and described herein;

FIG. 3H depicts the intensity profile of a laser beam focal line formed using the optical assembly of FIG. 3A and directed into the transparent workpiece at an oblique incidence angle, according or more embodiments shown and described herein;

FIG. 3I graphically depicts the irradiance of laser beam focal lines formed using the optical assembly of FIG. 3A as a function of propagation distance within a transparent workpiece, according to one or more embodiments shown and described herein;

FIG. 4A schematically depicts an optical assembly for laser processing a transparent workpiece including a beam source, an multi-optic axicon assembly, and a lens assembly, according to one or more embodiments described herein;

FIG. 4B schematically depicts the multi-optic axicon assembly of FIG. 4A, according to one or more embodiments described herein;

FIG. 4C schematically depicts a partial view of an optical assembly for laser processing a transparent workpiece including a multi-optic axicon assembly, according to one or more embodiments described herein;

FIG. 5A schematically depicts a cross sectional beam plot of a laser beam focal line formed using the optical assembly of FIG. 2A and directed into an example transparent workpiece that is tilted 35° relative to the beam pathway, at a depth of 0.1 mm within the example transparent workpiece, according to one or more embodiments described herein;

FIG. 5B schematically depicts a cross sectional beam plot of the laser beam focal line of FIG. 5A, at a depth of 1.9 mm within the transparent workpiece, according to one or more embodiments described herein;

FIG. 5C schematically depicts a cross sectional beam plot of a laser beam focal line formed using a frustum optical element of the multi-optic axicon assembly of FIG. 4A, without using a lens axicon, and directed into an example transparent workpiece that is tilted 35° relative to the beam pathway, at a depth of 0.1 mm within the example transparent workpiece, according to one or more embodiments described herein;

FIG. 5D schematically depicts a cross sectional beam plot of the laser beam focal line of FIG. 5C, at a depth of 1.9 mm within the transparent workpiece, according to one or more embodiments described herein;

FIG. 5E schematically depicts a cross sectional beam plot of a laser beam focal line formed using a lens axicon of the multi-optic axicon assembly of FIG. 4A, without using the frustum optical element, and directed into an example transparent workpiece that is tilted 35° relative to the beam pathway, at a depth of 0.1 mm within the example transparent workpiece, according to one or more embodiments described herein;

FIG. 5F schematically depicts a cross sectional beam plot of the laser beam focal line of FIG. 5E, at a depth of 1.9 mm within the transparent workpiece, according to one or more embodiments described herein;

FIG. 5G schematically depicts a cross sectional beam plot of a laser beam focal line formed using the multi-optic axicon assembly of FIG. 4A and directed into an example transparent workpiece that is tilted 35° relative to the beam pathway, at a depth of 0.1 mm within the example transparent workpiece, according to one or more embodiments described herein;

FIG. 5H schematically depicts a cross sectional beam plot of the laser beam focal line of FIG. 5G, at a depth of 1.9 mm within the transparent workpiece, according to one or more embodiments described herein;

FIG. 6A schematically depicts the split quarter waveplate of FIG. 4A, according to one or more embodiments described herein;

FIG. 6B schematically depicts a cross sectional beam plot of a laser beam focal line formed using the multi-optic axicon assembly of FIG. 4A with the split quarter waveplate of FIG. 6A, according to one or more embodiments described herein;

FIG. 7A graphically depicts the relative intensity of laser pulses within an exemplary pulse burst vs. time, according to one or more embodiments described herein;

FIG. 7B graphically depicts relative intensity of laser pulses vs. time within another exemplary pulse burst, according to one or more embodiments described herein;

FIG. 8A schematically depicts a side view of a transparent workpiece having a contour of angled defects, according to one or more embodiments described herein;

FIG. 8B schematically depicts a side view of two separated articles formed from the transparent workpiece of FIG. 8A, each separated article comprising an angled edge, according to one or more embodiments shown and described herein;

FIG. 9A schematically depicts a side view of a transparent workpiece having a closed curved contour of angled defects, according to one or more embodiments described herein;

FIG. 9B schematically depicts a side view of a separated article formed from the transparent workpiece of FIG. 9A, the separated article comprising a conical hole with an angled edge, according to one or more embodiments shown and described herein;

FIG. 10A schematically depicts a side view of a transparent workpiece having a contour of defects extending from an impingement surface to an edge surface and a contour of defects extending from an opposite surface to an edge surface, according to one or more embodiments shown and described herein; and

FIG. 10B schematically depicts a side view of a separated article formed from the transparent workpiece of FIG. 10A, the separated article comprising a beveled edge, according to one or more embodiments shown and described herein.

## DETAILED DESCRIPTION

Reference will now be made in detail to embodiments of processes for laser processing transparent workpieces, such as glass workpieces, examples of which are illustrated in the accompanying drawings. Whenever possible, the same reference numerals will be used throughout the drawings to refer to the same or like parts. According to one or more embodiments described herein, a transparent workpiece may be laser processed to form a contour in the transparent workpiece that comprises a series of defects along a line of intended separation for separating the transparent workpiece into two or more separated articles. Each of the defects comprise a defect angle of greater than 10° relative to normal incidence such that, after separation of the transparent workpiece along the contour, the resultant separated articles comprise an angled edge having an edge angle of greater than 10° relative to normal incidence. Defects may be formed in a transparent workpiece using a low diffracting beam, such as a quasi-non diffracting beam, focused into a laser beam focal line.

Using current methods, distortion and aberration of extended focus laser beams (e.g., quasi-non-diffracting beams) increases when the beam is directed into the transparent workpiece at increased angles relative to normal incidence (e.g., angles greater than 10° from normal incidence) and as such, it is difficult to form a series of high angle defects to facilitate the separation of transparent workpieces into separated articles having angled edges. For example, using previous laser processing techniques, when a laser beam enters a transparent workpiece with an angled, curved, or stepped face, aberrations are introduced into the beam. For Bessel beams, these aberrations result in a large decrease of peak beam intensity as the beam travels inside the transparent workpiece, diminishing the quality or even preventing the formation of high angle defects. While not intending to be limited by theory, peak beam intensity decreases because, in conventional angled cutting, the central lobe of a standard Bessel beam splits into multiple lobes and thus the peak intensity of any one of the split lobes is less than the peak intensity of the central lobe of a non-aberrated Bessel beam. While still not intending to be limited by theory, aberrations also lead to a decrease in the Rayleigh range of the beam. Thus, improved methods of laser processing transparent workpieces are desired. Accordingly, the methods and optical assemblies described herein use arrangements of one or more aspheric optical elements, such as radially offset aspheric optical elements and multi-optic axicon assemblies, to form angled laser beam focal lines in a transparent workpiece that retain minimal divergence along the length of the laser beam focal line to form a contour of high angled defects and facilitate the formation of separated articles having angled edges are described herein with specific references to the appended drawings.

As used herein, "laser processing" comprises directing a laser beam onto and/or into a transparent workpiece. In some embodiments, laser processing further comprises translating the laser beam relative to the transparent workpiece, for example, along a contour line or other pathway. Examples of laser processing include using a laser beam to form a contour comprising a series of defects that extend into the transparent workpiece and using an infrared laser beam to heat the transparent workpiece. Laser processing may separate the transparent workpiece along one or more desired lines of separation. However, in some embodiments, additional non-laser steps, such as applying mechanical force, may be utilized to separate the transparent workpiece along one or more desired lines of separation.

As used herein, "beam spot" refers to a cross section of a laser beam (e.g., a beam cross section) at the impingement location of the laser beam at an impingement surface of a transparent workpiece, i.e., the surface of a transparent workpiece upon which the laser beam is first incident. The beam spot is the cross-section at the impingement location. In the embodiments described herein, the beam spot is sometimes referred to as being "axisymmetric" or "non-axisymmetric." As used herein, axisymmetric refers to a shape that is symmetric, or appears the same, for any arbitrary rotation angle made about a central axis, and "non-axisymmetric" refers to a shape that is not symmetric for any arbitrary rotation angle made about a central axis. The rotation axis (e.g., the central axis) is most often taken as being the optical axis (axis of propagation) of the laser beam, which is the axis extending in the beam propagation direction, which is referred to herein as the z-direction.

As used herein, "upstream" and "downstream" refer to the relative position of two locations or components along a beam pathway with respect to a beam source. For example, a first component is upstream from a second component if the first component is closer to the beam source along the path traversed by the laser beam than the second component.

As used herein, "laser beam focal line," refers to pattern of interacting (e.g., crossing) light rays of a laser beam that forms a focal region elongated in the beam propagation direction. In conventional laser processing, a laser beam is tightly focused to a focal point. The focal point is the point of maximum intensity of the laser beam and is situated at a focal plane in a transparent workpiece. In the elongated focal region of a focal line, in contrast, the region of maximum intensity of the laser beam extends beyond a point to a line aligned with the beam propagation direction. A focal line is formed by converging light rays that intersect (e.g., cross) to form a continuous series of focal points aligned with the beam propagation direction. The laser beam focal lines described herein are formed using a quasi-non-diffracting beam, mathematically defined in detail below.

As used herein, "contour line," corresponds to the set of intersection points of the laser beam with the incident surface of the transparent workpiece resulting from relative motion of the laser beam and the transparent workpiece. A contour line can be a linear, angled, polygonal or curved in shape A contour line can be closed (i.e. defining an enclosed region on the surface of the transparent workpiece) or open (i.e. not defining an enclosed region on the surface of the transparent workpiece). The contour line represents a boundary along which separation of the transparent workpiece into two or more parts is facilitated. Separation occurs spontaneously or with the assistance of external thermal or mechanical energy.

As used herein, "contour," refers to a set of defects in a transparent workpiece formed by a laser beam through relative motion of a laser beam and the transparent workpiece along a contour line. The defects are spaced apart along the contour line and are wholly contained within the interior of the transparent workpiece or extend through one or more surfaces into the interior of the transparent workpiece. Defects may also extend through the entire thickness of the transparent workpiece. Separation of the transparent workpiece occurs by connecting defects, such as, for example, through propagation of a crack.

As used herein, a "defect" refers to a region of a transparent workpiece that has been modified by a laser beam. Defects include regions of a transparent workpiece having a modified refractive index relative to surrounding unmodified regions of the transparent workpiece. Common defects include structurally modified regions such as void spaces, cracks, scratches, flaws, holes, perforations, densifications, or other deformities in the transparent workpiece produced by a laser beam focal line. Defects may also be referred to, in various embodiments herein, as defect lines or damage tracks. A defect or damage track is formed through interaction of a laser beam focal line with the transparent workpiece. As described more fully below, the laser beam focal line is produced by a pulsed laser. A defect at a particular location along the contour line is formed from a focal line produced by a single laser pulse at the particular location, a pulse burst of sub-pulses at the particular location, or multiple laser pulses at the particular location. Relative motion of the laser beam and transparent workpiece along the contour line results in multiple defects that form a contour.

The phrase "transparent workpiece," as used herein, means a workpiece formed from glass, glass-ceramic or other material which is transparent, where the term "transparent," as used herein, means that the material has a linear optical absorption of less than 20% per mm of material depth, such as less than 10% per mm of material depth for the specified pulsed laser wavelength, or such as less than 1% per mm of material depth for the specified pulsed laser wavelength. Unless otherwise specified, the material has a linear optical absorption of less than about 20% per mm of material depth. The transparent workpiece may have a depth (e.g., thickness) of from about 50 microns ($\mu$m) to about 10 mm (such as from about 100 $\mu$m to about 5 mm, or from about 0.5 mm to about 3 mm). Transparent workpieces may comprise glass workpieces formed from glass compositions, such as borosilicate glass, soda-lime glass, aluminosilicate glass, alkali aluminosilicate, alkaline earth aluminosilicate glass, alkaline earth boro-aluminosilicate glass, fused silica, or crystalline materials such as sapphire, silicon, gallium arsenide, or combinations thereof. In some embodiments, the transparent workpiece may be strengthened via thermal tempering before or after laser processing the transparent workpiece. In some embodiments, the glass may be ion-exchangeable, such that the glass composition can undergo ion-exchange for glass strengthening before or after laser processing the transparent workpiece. For example, the transparent workpiece may comprise ion exchanged and ion exchangeable glass, such as Corning Gorilla® Glass available from Corning Incorporated of Corning, NY (e.g., code 2318, code 2319, and code 2320). Further, these ion-exchangeable glasses may have coefficients of thermal expansion (CTE) of from about 6 ppm/°C to about 10 ppm/°C. Other example transparent workpieces may comprise display glasses, often used as substrates for thin-film transistor (TFT) fabrication for liquid crystal or OLED displays, such as EAGLE XG® and CORNING LOTUS™ available from Corning Incorporated of Corning, NY. These display glasses may have coefficients of thermal expansion (CTE) of from about 3 ppm/°C to about 4 ppm/°C. Moreover, the transparent workpiece may comprise other components that are transparent to the wavelength of the laser, for example, glass ceramics or crystals such as sapphire or zinc selenide.

In an ion exchange process, ions in a surface layer of the transparent workpiece are replaced by larger ions having the same valence or oxidation state, for example, by partially or fully submerging the transparent workpiece in an ion exchange bath. Replacing smaller ions with larger ions causes a layer of compressive stress to extend from one or more surfaces of the transparent workpiece to a certain depth within the transparent workpiece, referred to as the depth of layer. The compressive stresses are balanced by a layer of tensile stresses (referred to as central tension) such that the net stress in the glass sheet is zero. The formation of compressive stresses at the surface of the glass sheet makes the glass strong and resistant to mechanical damage and, as such, mitigates catastrophic failure of the glass sheet for flaws which do not extend through the depth of layer. In some embodiments, smaller sodium ions in the surface layer of the transparent workpiece are exchanged with larger potassium ions. In some embodiments, the ions in the surface layer and the larger ions are monovalent alkali metal cations, such as Li+ (when present in the glass), Na+, K+, Rb+, and Cs+. Alternatively, monovalent cations in the surface layer may be replaced with monovalent cations other than alkali metal cations, such as Ag+, Tl+, Cu+, or the like.

As used herein, the term "quasi-non-diffracting beam" is used to describe a laser beam having low beam divergence as mathematically described below. In particular, the laser beam used to form a contour of defects in the embodiments described herein. The laser beam has an intensity distribution $I(X,Y,Z)$, where $Z$ is the beam propagation direction of the laser beam, and $X$ and $Y$ are directions orthogonal to the beam propagation direction, as depicted in the figures. The X-direction and Y-direction may also be referred to as cross-sectional directions and the X-Y plane may be referred to as a cross-sectional plane. The coordinates and directions $X$, $Y$, and $Z$ are also referred to herein as $x$, $y$, and $z$; respectively. The intensity distribution of the laser beam in a cross-sectional plane may be referred to as a cross-sectional intensity distribution.

The quasi-non-diffracting laser beam may be formed by impinging a diffracting laser beam (such as a Gaussian beam) into, onto, and/or thorough a phase-altering optical element, such as an adaptive phase-altering optical element (e.g., a spatial light modulator, an adaptive phase plate, a deformable mirror, or the like), a static phase-altering optical element (e.g., a static phase plate, a diffractive optical element, or an aspheric optical element, such as an axicon, or the like), to modify the phase of the beam, to reduce beam divergence, and to increase Rayleigh range, as mathematically defined below. Example quasi-non-diffracting beams include Gauss-Bessel beams, Airy beams, Weber beams, and Bessel beams. Furthermore, optical assemblies that include a phase-altering optical element are described in more detail below.

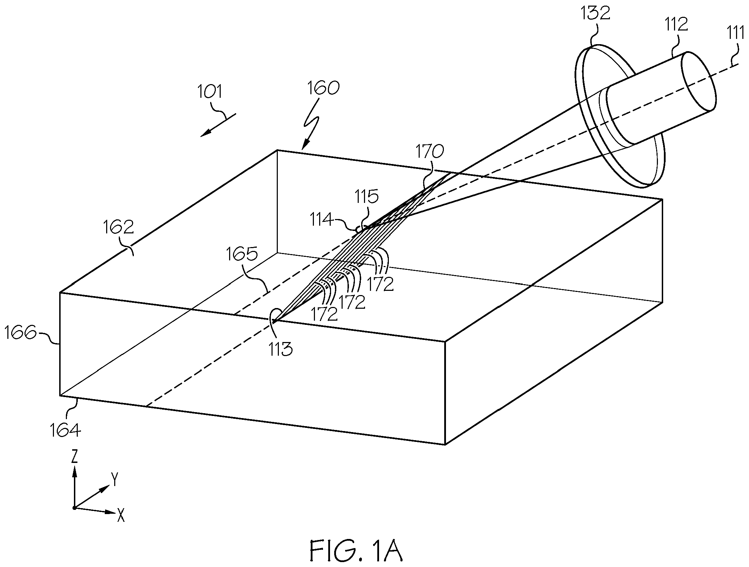

Without intending to be limited by theory, beam divergence refers to the rate of enlargement of the beam cross section in the direction of beam propagation (i.e., the Z direction). One example of a beam cross section discussed herein is a beam spot 114 of a laser beam 112 projected onto a transparent workpiece 160 (FIG. 1A). Diffraction is one factor that leads to divergence of laser beams. Other factors include focusing or defocusing caused by the optical systems forming the laser beams or refraction and scattering at interfaces. Laser beams for forming the defects of the contours are formed from laser beam focal lines. Laser beam focal lines have low divergence and weak diffraction. The divergence of the laser beam is characterized by the Rayleigh range $Z_R$, which is related to the variance $\sigma^2$ of the intensity distribution and beam propagation factor $M^2$ of the laser beam. In the discussion that follows, formulas will be presented using a Cartesian coordinate system. Corresponding expressions for other coordinate systems are obtainable using mathematical techniques known to those of skill in the art. Additional information on beam divergence can be found in the articles entitled "New Developments in Laser Resonators" by A.E. Siegman in SPIE Symposium Series Vol. 1224, p. 2 (1990) and "M$^2$ factor of Bessel-Gauss beams" by R. Borghi and M. Santarsiero in Optics Letters, Vol. 22(5), 262 (1997). Additional information can also be found in the international standards ISO 11146-1:2005(E) entitled "Lasers and laser-related equipment-Test methods for laser beam widths, divergence angles and beam propagation ratios-Part 1: Stigmatic and simple astigmatic beams", ISO 11146-2:2005(E) entitled "Lasers and laser-related equipment-Test methods for laser beam widths, divergence angles and beam propagation ratios-Part 2: General astigmatic beams", and ISO 11146-3:2004(E) entitled "Lasers and laser-related equipment-Test methods for laser beam widths, divergence angles and beam propagation ratios-Part 3: Intrinsic and geometrical laser beam classification, propagation and details of test "methods".

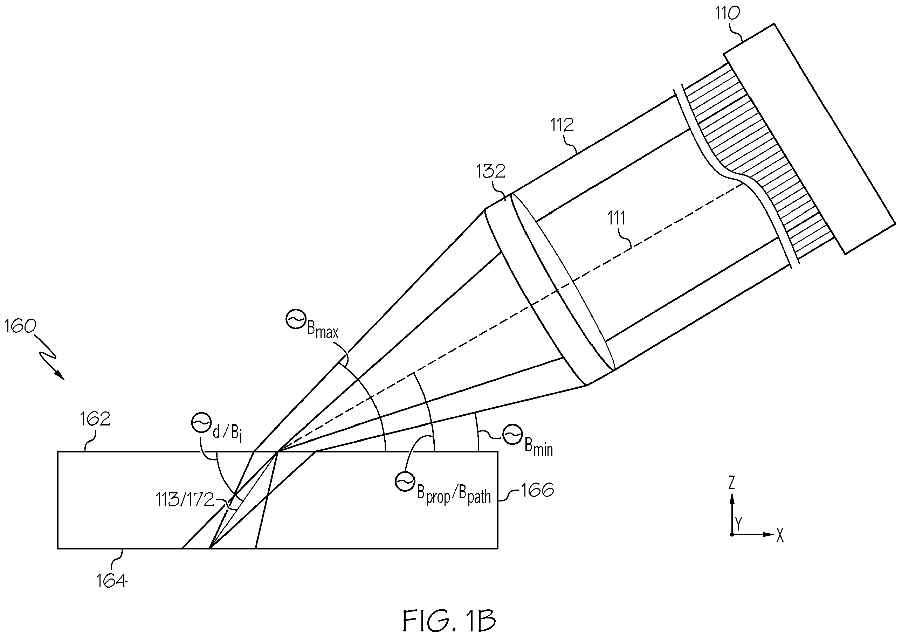

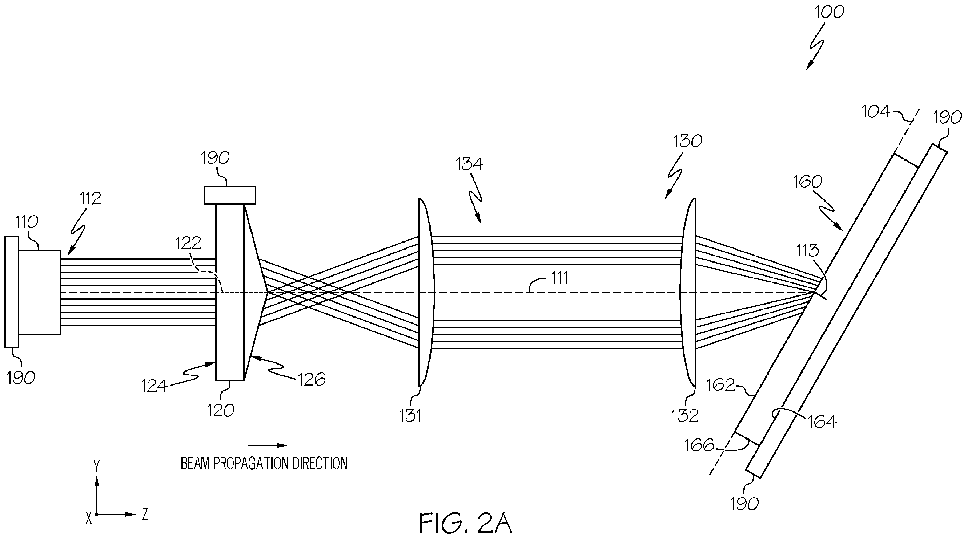

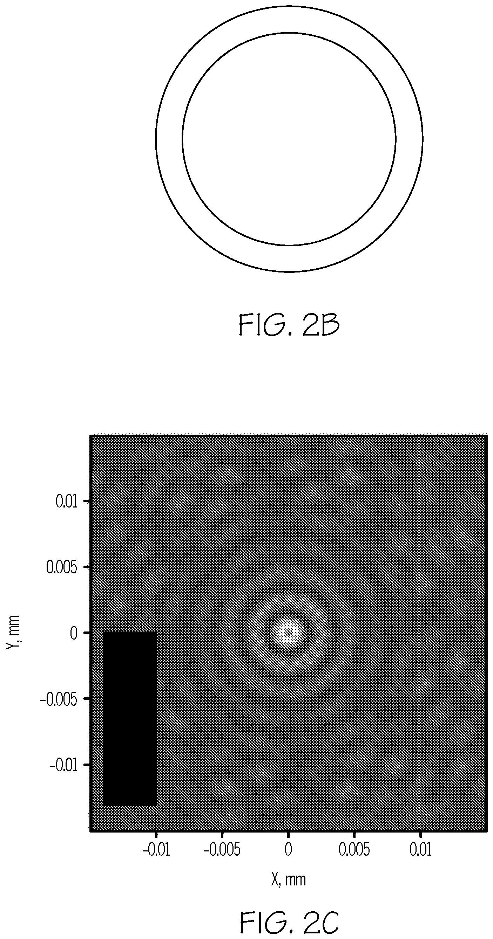

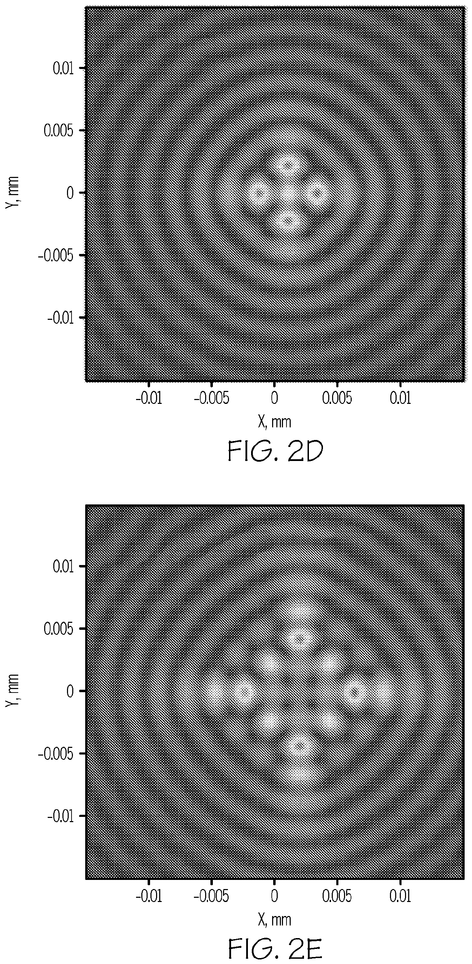

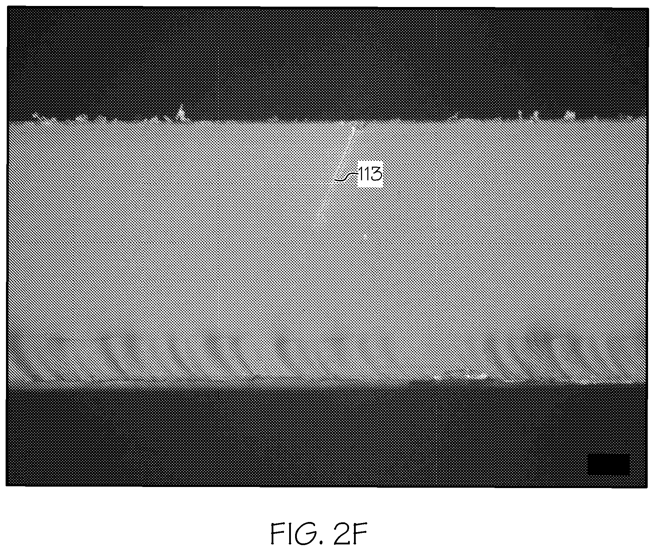

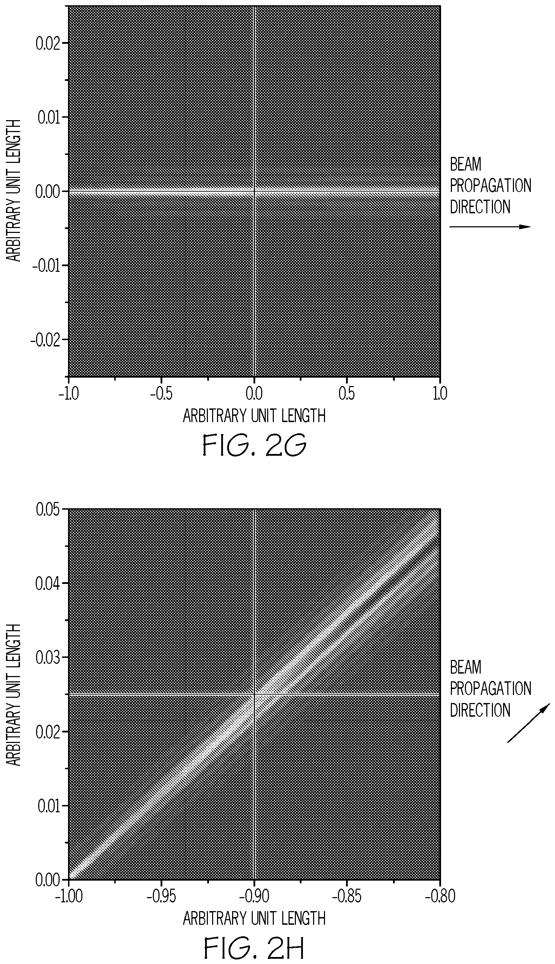

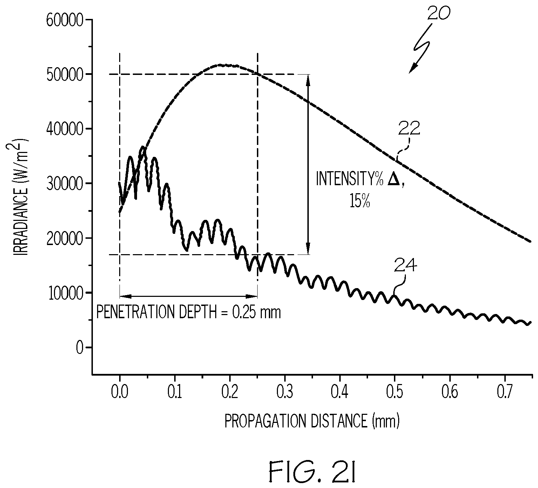

Referring to FIGS. 1A and 1B and 2, the pulsed laser beam 112 used to form the defects further has an intensity distribution I(X,Y,Z), where Z is the beam propagation direction of the pulsed laser beam 112, and X and Y are directions orthogonal to the direction of propagation, as depicted in the figures. The X-direction and Y-direction may also be referred to as cross-sectional directions and the X-Y plane may be referred to as a cross-sectional plane. The intensity distribution of the pulsed laser beam 112 in a cross-sectional plane may be referred to as a cross-sectional intensity distribution.

The pulsed laser beam 112 at the beam spot 114 or other cross sections may comprise a quasi-non-diffracting beam, for example, a beam having low beam divergence as mathematically defined below, by propagating the pulsed laser beam 112 (e.g., outputting the pulsed laser beam 112, such as a Gaussian beam, using a beam source 110) through an aspheric optical element 120, as described in more detail below with respect to the optical assembly 100 depicted in FIG. 2A. Beam divergence refers to the rate of enlargement of the beam cross section in the direction of beam propagation (i.e., the Z direction). As used herein, the phrase "beam cross section" refers to the cross section of the pulsed laser beam 112 along a plane perpendicular to the beam propagation direction of the pulsed laser beam 112, for example, along the X-Y plane. One example beam cross section discussed herein is the beam spot 114 of the pulsed laser beam 112 projected onto the transparent workpiece 160.

The length of the laser beam focal line produced from a quasi-non-diffracting beam is determined by the Rayleigh range of the quasi-non-diffracting beam. Particularly, the quasi-non-diffracting beam defines a laser beam focal line 113 having a first end point and a second end point each defined by locations where the quasi-non-diffracting beam has propagated a distance from the beam waist equal to a Rayleigh range of the quasi-non-diffracting beam. The length of the laser beam focal corresponds to twice the Rayleigh range of the quasi-non-diffracting beam. A detailed description of the formation of quasi-non-diffracting beams and determining their length, including a generalization of the description of such beams to asymmetric (such as non-axisymmetric) beam cross sectional profiles, is provided in U.S. Provisional Application Serial No. 62/402,337 and Dutch Patent Application No. 2017998.

The Rayleigh range corresponds to the distance (relative to the position of the beam waist as defined in Section 3.12 of ISO 11146-1 :2005(E)) over which the variance of the laser beam doubles (relative to the variance at the position of the beam waist) and is a measure of the divergence of the cross sectional area of the laser beam. The Rayleigh range can also be observed as the distance along the beam axis at which the peak optical intensity observed in a cross sectional profile of the beam decays to one half of its value observed in a cross sectional profile of the beam at the beam waist location (location of maximum intensity). Laser beams with large Rayleigh ranges have low divergence and expand more slowly with distance in the beam propagation direction than laser beams with small Rayleigh ranges.

Beam cross section is characterized by shape and dimensions. The dimensions of the beam cross section are characterized by a spot size of the beam. For a Gaussian beam, spot size is frequently defined as the radial extent at which the intensity of the beam decreases to $1/e^2$ of its maximum value. The maximum intensity of a Gaussian beam occurs at the center ($x = 0$ and $y = 0$ (Cartesian) or $r = 0$ (cylindrical)) of the intensity distribution and radial extent used to determine spot size is measured relative to the center.

Beams with Gaussian intensity profiles may be less preferred for laser processing to form defects 172 because, when focused to small enough spot sizes (such as spot sizes in the range of microns, such as about 1-5 $\mu$m or about 1-10 $\mu$m) to enable available laser pulse energies to modify materials such as glass, they are highly diffracting and diverge significantly over short propagation distances (low Rayleigh range). To achieve low divergence (high Rayleigh range), it is desirable to control or optimize the intensity distribution of the pulsed laser beam to reduce diffraction. Pulsed laser beams may be non-diffracting or weakly diffracting. Weakly diffracting laser beams include quasi-non-diffracting laser beams. Representative weakly diffracting laser beams include Bessel beams, Gauss-Bessel beams, Airy beams, Weber beams, and Mathieu beams.

Non-diffracting or quasi-non-diffracting beams generally have complicated intensity profiles, such as those that decrease non-monotonically vs. radius. By analogy to a Gaussian beam, an effective spot size $w_{o,eff}$ can be defined for any beam, even non-axisymmetric beams, as the shortest radial distance, in any direction, from the radial position of the maximum intensity ($r = 0$) at which the intensity decreases to $1/e^2$ of the maximum intensity. Further, for axisymmetric beams $w_{o,eff}$ is the radial distance from the radial position of the maximum intensity ($r = 0$) at which the intensity decreases to $1/e^2$ of the maximum intensity. A criterion for Rayleigh range $Z_R$ based on the effective spot size $w_{o,eff}$ for axisymmetric beams can be specified as non-diffracting or quasi-non-diffracting beams for forming damage regions in Equation (1), below:

$$Z_R > F_D \frac{\pi w_{0,eff}^2}{\lambda} \qquad (1)$$

where $F_D$ is a dimensionless divergence factor having a value of at least 10, at least 50, at least 100, at least 250, at least 500, at least 1000, in the range from 10 to 2000, in the range from 50 to 1500, in the range from 100 to 1000. For a non-diffracting or quasi-non-diffracting beam the distance (Rayleigh range), $Z_R$ in Equation (1), over which the effective spot size doubles, is $F_D$ times the distance expected if a typical Gaussian beam profile were used. The dimensionless divergence factor $F_D$ provides a criterion for determining whether or not a laser beam is quasi-non-diffracting. As used herein, the pulsed laser beam 112 is considered quasi-non-diffracting if the characteristics of the laser beam satisfy Equation (1) with a value of $F_D \geq 10$. As the value of $F_D$ increases, the pulsed laser beam 112 approaches a more nearly perfectly non-diffracting state.

Additional information about Rayleigh range, beam divergence, intensity distribution, axisymmetric and non-axisymmetric beams, and spot size as used herein can also be found in the international standards ISO 11146-1:2005(E) entitled "Lasers and laser-related equipment-Test methods for laser beam widths, divergence angles and beam propagation ratios-Part 1: Stigmatic and simple astigmatic beams", ISO 11146-2:2005(E) entitled "Lasers and laser-related equipment-Test methods for laser beam widths, divergence angles and beam propagation ratios-Part 2: General astigmatic beams", and ISO 11146-3:2004(E) entitled "Lasers and laser-related equipment Test methods for laser beam widths, divergence angles and beam propagation ratios-Part 3: Intrinsic and geometrical laser beam classification, propagation and details of test methods".

Referring now to FIGS. 1A and 1B, an example transparent workpiece 160 is schematically depicted undergoing laser processing according to the methods described herein. In particular, FIGS. 1A and 1B schematically depict directing a laser beam 112 that is output by a beam source 110 and oriented along a beam pathway 111 into the transparent workpiece 160 at a beam propagation angle $\theta_{Bprop}$ such that a portion of the laser beam 112 directed into the transparent workpiece 160 comprises a laser beam focal line 113 that is not orthogonal to an impingement surface 162 of the transparent workpiece 160 and instead comprises an internal beam angle $\theta_{Bi}$ less than 90° relative to the impingement surface 162. The laser beam 112 forms a beam spot 114 projected onto the impingement surface 162 of the transparent workpiece 160, which further comprises an opposite surface 164 and an edge surface 166 extending between the impingement surface 162 and the opposite surface 164.

The laser beam focal line 113 generates an induced absorption within the transparent workpiece 160 to produce a defect 172 within the transparent workpiece 160. Because the laser beam focal line 113 comprises an internal beam angle $\theta_{Bi}$, the defect 172 formed by induced absorption comprises a defect angle $\theta_D$ equal to or approximately equal to the internal beam angle $\theta_{Bi}$. In other words, the defects 172 formed in the embodiments described herein comprise angled defects, where "angled" refers to an angular deviation from the direction normal to the impingement surface 162 at impingement location 115. Laser beam focal line 113 is correspondingly angled. Moreover, while the laser beam focal line 113 depicted in FIGS. 1A and 1B extends from the impingement surface 162 to the opposite surface 164, this merely illustrates one possible disposition of the laser beam focal line 113 in and near the transparent workpiece 160. In particular, it should be understood that a portion of the laser beam focal line 113 may extend outside of the transparent workpiece 160, for example, beyond the impingement surface 162, beyond the opposite surface 164, beyond the edge surface 166, or combinations thereof. Further, when a portion of the laser beam focal line 113 extends outside of the transparent workpiece 160, that external portion of the laser beam focal line 113 comprises an external focal line angle which, due to Snell's law, is less than the internal beam angle $\theta_{Bi}$ relative the impingement surface 162. Moreover, it should be understood that the laser beam focal line 113 may start at a location within the transparent workpiece 160 (e.g., between the impingement surface 162 and the opposite surface 164) and end at a location within the transparent workpiece 160 (e.g., between the impingement surface 162 and the opposite surface 164).

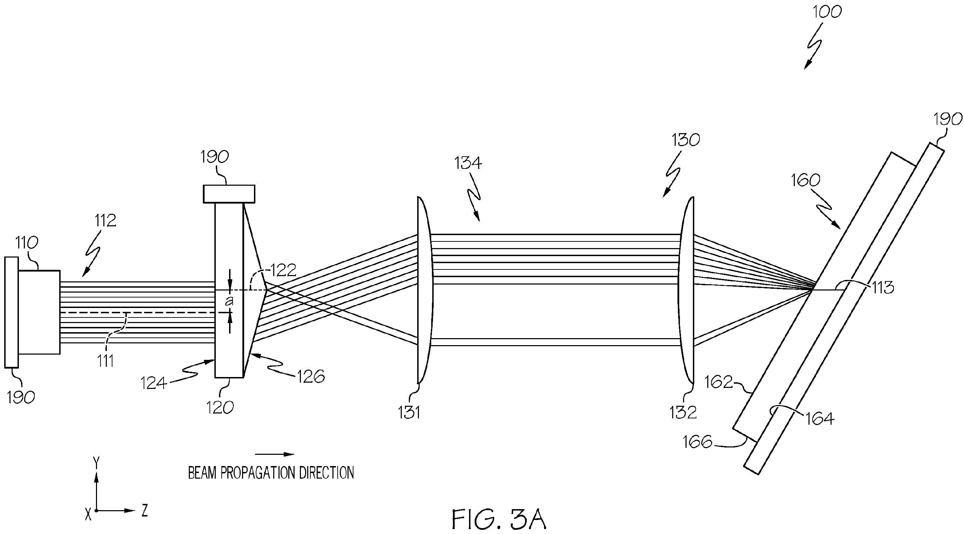

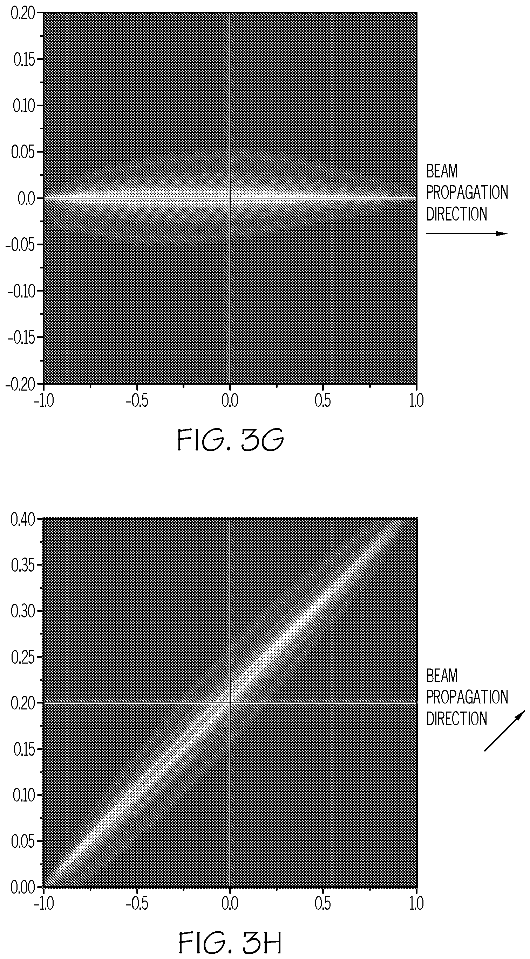

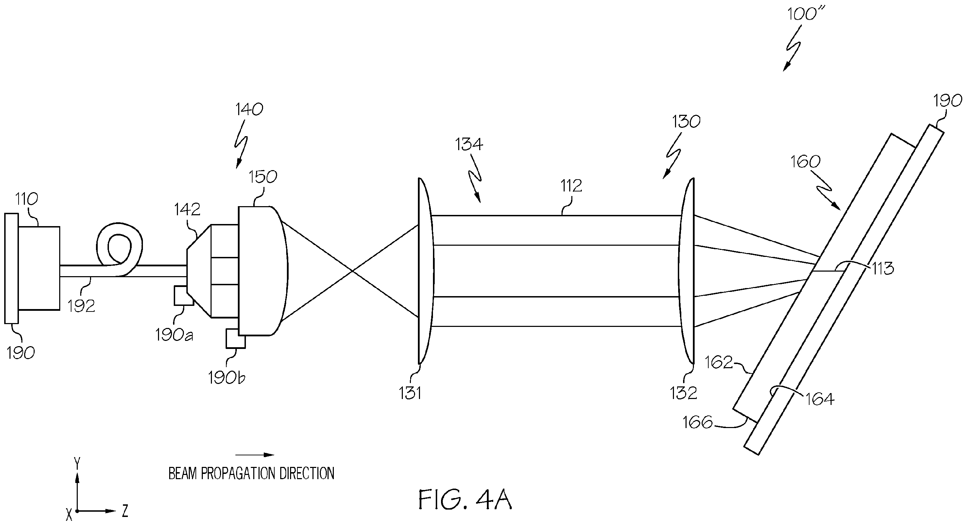

FIGS. 2A, 3A, and 4A depict optical assemblies configured to produce laser beam focal lines 113. FIG. 2A depicts a conventional optical assembly 100 that uses an aspheric optical element 120 aligned with the beam pathway 111 to produce a laser beam 112 that is quasi-non-diffracting when it impinges the impingement surface 162 of the transparent workpiece 160. However, when using the conventional optical assembly 100 of FIG. 2A to impinge the impingement surface 162 at an angle such that refraction of the laser beam 112 causes the laser beam focal line 113 to have an internal beam angle $\theta_{bi}$ of less than 80° relative to the impingement surface 162, the laser beam focal line 113 loses its quasi-non-diffracting character (as mathematically defined above) within the transparent workpiece 160 due to increasing aberrations, such as astigmatism. Accordingly, optical assemblies 100' (FIG. 3A) and 100" (FIG. 4A) are designed to modify the laser beam 112 such that when the laser beam focal line 113 has an internal beam angle $\theta_{bi}$ less than 80° relative to the impingement surface 162, the laser beam focal line 113 exhibits quasi-non-diffracting character within the transparent workpiece 160. FIG 3A depicts an optical assembly 100' in which a beam source 110 is radially offset from the other optical components of the optical assembly 100' such that a laser beam 112 (i.e., an input beam) output by a beam source 110 is radially offset from an aspheric optical element 120. FIG 4A depicts an optical assembly 100" that comprises a multi-optic axicon assembly 140 having a frustum optical element 142 and a lens axicon 150. As described in detail below, the optical assemblies 100', 100" of FIG. 3A and 4A are useful for forming laser beam focal lines 113 that have an internal beam angle $\theta_{Bi}$ less than 80° relative to the impingement surface 162 that have a quasi-non-diffracting character within the transparent workpiece 160 and that have minimal astigmatic aberrations.

Referring now to FIG. 1B, each of the beam propagation angle $\theta_{Bprop}$, the internal beam angle $\theta_{Bi}$, and the defect angle $\theta_D$ are measured relative to the impingement surface 162. The beam propagation angle $\theta_{Bprop}$ comprises the average angle of light rays of the laser beam 112 impinging the impingement surface 162, measured relative to the impingement surface 162. As shown in FIG. 1B, the laser beam 112 impinging the impingement surface 162 includes a maximum beam propagation angle $\theta_{Bmax}$, which is the angle of the light rays of the laser beam 112 having the largest angle at the impingement surface 162 relative the impingement surface 162, and a minimum beam propagation angle $\theta_{Bmin}$, which is the angle of the light rays of the laser beam 112 having the smallest angle at the impingement surface 162 relative to the impingement surface 162. Further, the laser beam 112 comprises a beam pathway angle $\theta_{Bpath}$ (i.e., the angle of the beam pathway 111), which is the average angle of light rays of the laser beam 112 impinging the impingement surface 162 relative the impingement surface 162 in a scenario in which the light rays approach the impingement surface 162 of the transparent workpiece with uniform radial distribution. In some embodiments, for example, the embodiment depicted in FIG. 1B, the laser beam 112 at the impingement surface 162 comprises uniform azimuthal intensity and thus, the beam pathway angle $\theta_{Bpath}$ and the beam propagation angle $\theta_{Bprop}$ are the same angle. However, in other embodiments, for example, the embodiments shown in FIG. 3A-3I, the laser beam comprises non-uniform azimuthal intensity at the impingement surface 162 and thus, the beam pathway angle $\theta_{Bpath}$ and the beam propagation angle $\theta_{Bprop}$ are different angles.

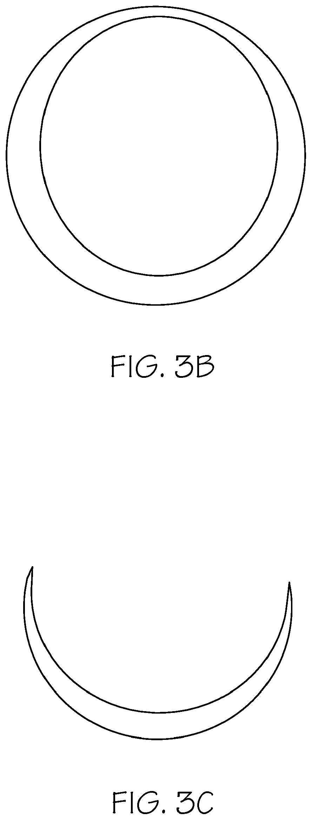

Referring again to FIGS. 1A and 1B, the laser beam 112 may be focused into the laser beam focal line 113 using a lens 132. While a single lens 132 is depicted in FIG. 1A and 1B, some embodiments may include a lens assembly 130 that comprises a first lens 131 and a second lens 132, and repetitions thereof (FIG. 2A, 3A, 4A) to focus the laser beam 112 into the laser beam focal line 113. As depicted in FIG. 1B, the laser beam 112 may comprise an annular shape when impinging the lens 132. However, in other embodiments, such as the embodiment shown in FIGS. 3A-3F, the laser beam 112 may comprise a partial annular shape, such as a crescent shape, as shown in FIG. 3C. The laser beam focal line 113 may have a length in a range of from about 0.1 mm to about 100 mm or in a range of from about 0.1 mm to about 10 mm. Various embodiments may be configured to have a laser beam focal line 113 with a length l of about 0.1 mm, about 0.2 mm, about 0.3 mm, about 0.4 mm, about 0.5 mm, about 0.7 mm, about 1 mm, about 2 mm, about 3 mm, about 4 mm, or about 5 mm e.g., from about 0.5 mm to about 5 mm.

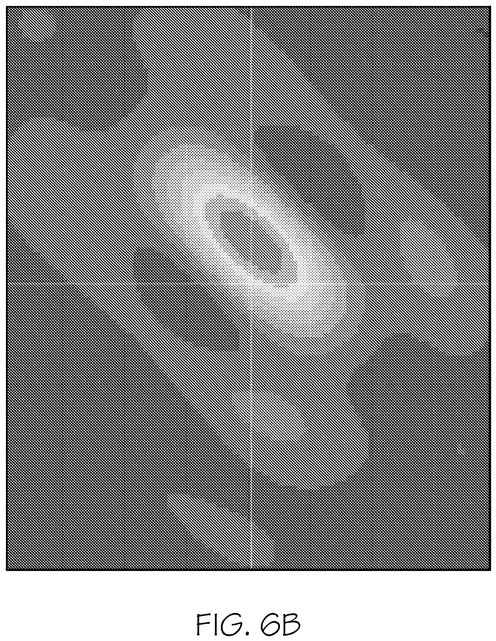

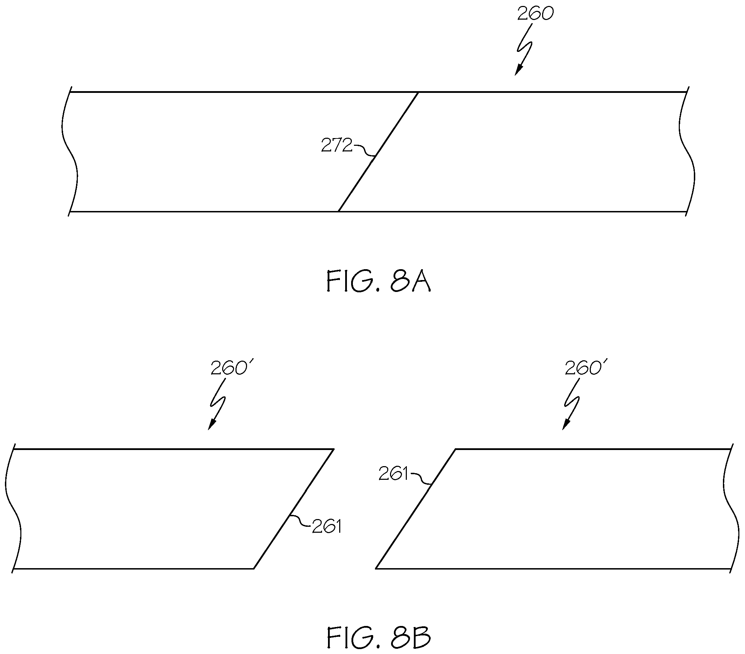

In operation, the laser processing depicted in FIGS. 1A and 1B further includes translating at least one of the laser beam focal line 113 and the transparent workpiece 160 relative to each other in a translation direction 101 along a contour line 165 (i.e., a line of desired separation) to form a plurality of defects 172. The plurality of defects 172 form a contour 170, which may be used to separate the transparent workpiece 160 into a plurality of separated articles 260', 360', 460' (FIGS. 6B, 7B, 8B). In some embodiments, the defects 172 may extend, for example, through the depth (i.e., the thickness) of the transparent workpiece 160, as shown in FIG. 1A. In other embodiments, the defects may extend from the impingement surface 162 to the edge surface 166, from the opposite surface 164 to the edge surface 166, or both (e.g., defects 472a, 472b shown in FIG. 8A).

The optical assemblies 100, 100', 100" of FIGS. 2A, 3A, and 4A each comprise the beam source 110. The transparent workpiece 160 may be positioned such that the laser beam 112 output by the beam source 110 irradiates the transparent workpiece 160, for example, after traversing the aspheric optical element 120 (in FIGS. 2A and 3A) or the multi-optic axicon assembly 140 (FIG. 4A). The beam source 110 may comprise any known or yet to be developed beam source 110 configured to output laser beams 112, for example, pulsed laser beams or continuous wave laser beams. In some embodiments, the beam source 110 may output a laser beam 112 comprising a wavelength of for example, 1064 nm, 1030 nm, 532 nm, 530 nm, 355 nm, 343 nm, 266 nm, or 215 nm. The laser beam 112 used to form defects 172 in the transparent workpiece 160 may be well suited for materials that are transparent to the selected laser wavelength and the transparent workpiece 160 may be positioned such that the laser beam 112 output by the beam source 110 irradiates the transparent workpiece 160. Further, the beam pathway 111 may extend from the beam source 110 to the transparent workpiece 160 such that when the beam source 110 outputs the laser beam 112, laser beam 112 travels along the beam pathway 111.

Further, in the embodiments depicted in FIGS. 2A, 3A, and 4A, the lens assembly 130 comprises the first lens 131 and the second lens 132. In operation, the first lens 131 collimates the laser beam 112 within a collimation space 134 between the first lens 131 and the second lens 132 and the second lens 132 focuses the laser beam 112, for example, into the transparent workpiece 160, which may be positioned at an imaging plane 104 of the second lens 132. In some embodiments, the first lens 131 and the second lens 132 each comprise plano-convex lenses. When the first lens 131 and the second lens 132 each comprise plano-convex lenses, the curvature of the first lens 131 and the second lens 132 may each be oriented toward the collimation space 134. In other embodiments, the first lens 131 may comprise other collimating lenses and the second lens 132 may comprise a meniscus lens, an asphere, or another higher-order corrected focusing lens. In operation, the lens assembly 130 may control the position of the laser beam focal line 113 along the beam pathway 111 (e.g., to control the positioning of the laser beam focal line 113 in the depth of the transparent workpiece 160).

While a single first lens 131 and a single second lens 132 are depicted in FIGS. 2A, 3A, and 4A, other embodiments of the lens assembly 130 may comprise two or more sets of lenses, each set comprising the first lens 131 positioned upstream the second lens 132. In embodiments comprising two or more sets of lens 132, the most downstream positioned second lens 132 of the lens assembly 130 may focus the laser beam 112 into the transparent workpiece 160. For example, the lens assembly 130 may comprise 4F lens assembly, as depicted in FIGS. 2A, 3A, 4A, an 8F lens assembly comprising two sets of first and second lenses 131, 132, or any other known or yet to be developed lens assembly 130 for focusing the laser beam 112 into the laser beam focal line 113. Moreover, it should be understood that some embodiments may not include the lens assembly 130 and instead, the aspheric optical element 120 (FIGS. 2A, 3A) or the multi-optic axicon assembly 140 (FIG. 4A) may focus the laser beam 112 into the laser beam focal line 113 and into the transparent workpiece 160.

In the embodiments of optical assemblies 100 and 100' depicted in FIGS. 2A and 3A, the aspheric optical element 120 is positioned within the beam pathway 111 between the beam source 110 and the transparent workpiece 160. The aspheric optical element 120 may comprise any optical element comprising an aspherical shape. In some embodiments, the aspheric optical element 120 may comprise a conical wavefront producing optical element, such as an axicon lens, for example, a negative refractive axicon lens, a positive refractive axicon lens, a reflective axicon lens, a diffractive axicon lens, or the like. In some embodiments, when the aspheric optical element 120 comprises an axicon, the axicon may have a laser output surface 126 (e.g., conical surface) having an angle of about 1.2°, such as from about 0.5° to about 5°, or from about 1° to about 1.5°, or even from about 0.5° to about 20°, the angle measured relative to the laser input surface 124 (e.g., flat surface) upon which the laser beam 112 enters the axicon lens. Further, the laser output surface 126 terminates at a conical tip 128. Moreover, the aspheric optical element 120 includes a centerline axis 122 extending from the laser input surface 124 to the laser output surface 126 and terminating at the conical tip 128.

In FIG. 2A, the conical tip 128 of the aspheric optical element 120 is aligned with the beam pathway 111 and the aspheric optical element 120 shapes the incoming laser beam 112 (e.g., an incoming Gaussian beam) into a quasi-non-diffracting beam, which, in turn, is directed through the first lens 131 and the second lens 132, which focuses the laser beam 112 into the laser beam focal line 113. In other words, the centerline axis 122 of the aspheric optical element 120 and the cross-sectional center of the laser beam 112 as the laser beam 112 irradiates the laser input surface 124 of the aspheric optical element 120 are aligned. FIG. 2B depicts the cross sectional intensity of the laser beam 112 downstream the aspheric optical element 120. As described above, the laser beam 112 is quasi-non diffracting downstream the aspheric optical element 120 and, as shown by FIG. 2B, comprises azimuthally uniform intensity. While not intending to be limited by theory, the laser beam focal line 113 formed by the optical assembly 100 of FIG. 2A retains a quasi-non diffracting character through the depth of the transparent workpiece 160 when directed into the transparent workpiece 160 at a beam propagation angle $\theta_{Bprop}$ of 90° relative the impingement surface 162 (i.e. orthogonal the impingement surface 162) and the laser beam focal line 113 comprises an internal beam angle $\theta_{Bi}$ of 90° relative the impingement surface 162 (i.e. orthogonal the impingement surface 162).

However, when the beam propagation angle $\theta_{Bprop}$ of the laser beam 112 formed using the optical assembly 100 of FIG. 2A impinges the impingement surface 162 of the transparent workpiece 160 at a beam propagation angle $\theta_{Bprop}$ that, after refraction of the laser beam 112 at the impingement surface 162, forms a laser beam focal line 113 having an internal beam angle $\theta_{Bi}$ of less than 80°, for example, 75° or less, the laser beam focal line 113 forms astigmatic aberrations within the transparent workpiece 160. These asigmatic aberrations are introduced to the laser beam focal line 113 by the interaction of the laser beam 112 with the impingement surface 162. In other words, the refraction of each light ray the laser beam 112 directed into the transparent workpiece 160 at a sufficiently non-orthogonal angle causes astigmatism, such that the laser beam 112 loses its quasi-non-diffracting character and it becomes increasing difficult to create sufficient damage in the transparent workpiece 160 to form the defects 172 of a contour 170. While not intending to be limited by theory, these astigmatic aberrations are the result of the conical energy refracting through the transparent workpiece 160, creating an anamorphic line focus. While still not intending to be limited by theory, the astigmatic aberrations of the laser beam focal line 113 having internal beam angle $\theta_{Bi}$ of less than 80° formed using the optical assembly 100 of FIG. 2A reduce the energy intensity of the laser beam focal line 113 along its length such that induced absorption no longer generates the defect 172 at a depth within the transparent workpiece 160. In particular, increasing astigmatic aberrations reduce the percentage of laser power of the laser beam focal line 113 contained in the central lobe, and hence reduces the peak beam intensity, at increasing depth locations of the laser beam focal line 113 within the transparent workpiece 160. The peak beam intensity decreases with increased astigmatic aberrations within the transparent workpiece 160.

Referring now to FIGS. 2C-2E, cross sectional beam plots of the laser beam focal line 113 formed using the optical assembly 100 of FIG. 2A directed into the transparent workpiece 160 at a beam propagation angle $\theta_{Bprop}$ such that, after refraction at the impingement surface 162, the laser beam focal line 113 comprises an internal beam angle $\theta_{Bi}$ of 80°, are depicted. In particular, the cross sectional beam plots of FIGS. 2C-2E show the energy density of the laser beam focal line 113 at the impingement surface 162 (FIG. 2C), at a depth of 250 $\mu$m within the transparent workpiece 160 (FIG. 2D), and at a depth of 450 $\mu$m within the transparent workpiece 160 (FIG. 2E). As shown in FIGS. 2C-2E, astigmatic aberrations increase at increasing depths in the transparent workpiece 160, decreasing the energy density of the central lobe. Thus, at some depth within the transparent workpiece 160, the energy density of the central lobe decreases below a threshold energy density such that the defect 172 is not formed at that depth. For example, FIG. 2F depicts an example defect 172 having a defect angle $\theta_D$ of 60° formed with the optical assembly 100 of FIG. 2A and, as shown in FIG. 2F, the defect 172 only extends a short distance into the depth of the transparent workpiece 160 as increasing astigmatic aberrations breaks down the quasi-non-diffracting character of the laser beam focal line 113. In addition, the astigmatic aberrations increase at increasing depths in the transparent workpiece 160 at a faster rate when the internal beam angle $\theta_{Bi}$ of the laser beam focal line 113 is decreased relative to the impingement surface 162. To further illustrate, FIG. 2G depicts the intensity profile of the laser beam focal line 113 formed using the optical assembly 100 of FIG. 2A as it propagates in the transparent workpiece 160 when directed into the transparent workpiece 160 at a beam propagation angle $\theta_{Bprop}$ of 90° (i.e., normal) and FIG. 2H depicts the intensity profile of the laser beam focal line 113 formed using the optical assembly 100 of FIG. 2A as it propagates in the transparent workpiece 160 when directed into the transparent workpiece at an oblique beam propagation angle $\theta_{Bprop}$. As show by FIG. 2H, the oblique beam propagation angle $\theta_{Bprop}$ causes increases in astigmatic aberrations at increasing depths in the transparent workpiece 160, decreasing the peak intensity of the laser beam focal line 113.

Referring now to FIG. 2I, a graph 20 shows depicts the irradiance of the laser beam focal line 113 formed using the optical assembly 100 of FIG. 2A as it propagates in the transparent workpiece 160 when directed into the transparent workpiece 160 at a beam propagation angle $\theta_{Bprop}$ of 90° (line 22) and when directed into the transparent workpiece at an oblique beam propagation angle $\theta_{Bprop}$ of (line 24) as a function of propagation distance within the transparent workpiece 160. As shown by graph 20, after a propagation distance of 250 $\mu$m, the irradiance of the obliquely formed laser beam focal line 113 (line 24) decreases by greater than 50% when compared to the laser beam focal line 113 of line 22 directed into the transparent workpiece 160 at a beam propagation angle $\theta_{Bprop}$ of 90°.

Referring now to FIG. 3A, the laser beam 112 (i.e., an input beam) output by the beam source 110 is offset from the aspheric optical element 120 in a radial direction (e.g., a direction along a radius of the laser beam 112, orthogonal to the beam propagation direction). As depicted in FIGS. 3B and 3C, when the laser beam 112 impinges the aspheric optical element 120 radially offset relative to the centerline axis 122 of the aspheric optical element 120, the laser beam 112 comprises non-uniform radial intensity downstream the offset aspheric optical element 120. Further, the cross section of the laser beam 112 (e.g., the non-uniform radial intensity) may be rotated by rotating the aspheric optical element 120 about the optical axis 102.

Without intending to be limited by theory, this non-uniform radial intensity is generated because the misalignment of the laser beam 112 relative the centerline axis 122 of the aspheric optical element causes redistribution the laser energy incident on the aspheric optical element 120, as that laser energy traverses the aspheric optical element 120. In general, such a perturbation would be expected to be non-ideal, as offsetting the input beam or aspheric optical element 120 breaks the azimuthal symmetry of the light rays of the laser beam 112. Thus, one may expect that the quality of the laser beam focal line 113 is degraded by offsetting the aspheric optical element 120 from the beam pathway 111. With this understanding, most often those skilled in the art take great care to minimize such radial perturbations, working to optimally center the input beam, aspheric optical element (e.g. axicon), and downstream lenses, with respect to each other. The above applies well when the quasi non-diffracting beam is normally incident on a transparent substrate, in which case the optical system and substrate properties are symmetric azimuthally about the beam propagation direction. However, in the case of cutting tilted or angled transparent substrates, the azimuthal optical symmetry of the system is broken and the above alignments are no longer preferred. While this radial offset perturbation of the laser beam 112 may reduce the overall energy of the laser beam 112, some or all of the non-uniform radial intensity formed by this perturbation has increased energy density once refracted into the tilted transparent workpiece 160, when compared to the uniform radial intensity of the same laser beam 112 in a situation in which the aspheric optical element 120 is not offset. In other words, while not intending to be limited by theory, the energy density in the central lobe of the portion of the laser beam 112 refracted into the transparent workpiece 160 does not reduce as quickly as the energy density of the central lobe shown in FIGS. 2C-2E. Instead, the laser beam focal line 113 formed from this non-uniform beam forms minimal astigmatic aberrations.

Indeed, the radial offset of the laser beam 112 with respect to the aspheric optical element 120 alters the laser beam 112 such that is quasi non-diffracting even once refracted into the transparent workpiece 160 such that the laser beam focal line 113 has an internal beam angle $\theta_{Bi}$ of less than 80°. For example, the internal beam angle $\theta_{Bi}$ may be from 80° to 50°, such as 80° to 55°, 75° to 55°, 70° to 55°, or the like, for example, 79°, 78°, 77°, 76°, 75°, 74°, 73°, 72°, 71°, 70°, 69°, 68°, 67°, 66°, 65°, 64°, 63°, 62°, 61°, 60°, 59°, 58°, 57°, 56°, 55°, 54°, 53°, 52°, 51°, or the like.

Referring again to FIG. 3A, the laser beam 112 is radially offset from the aspheric optical element 120 by an offset distance a. In particular, the offset distance a is the distance in the X-Y plane between the centerline axis 122 of the aspheric optical element 120 and the cross-sectional center of the laser beam 112 as the laser beam 112 irradiates the laser input surface 124 of the aspheric optical element 120. The relative offset between the aspheric optical element 120 and the laser beam 112 may be achieved by shifting the beam source 110 along the X-Y plane. The magnitude of the offset required to sufficiently break the symmetry of the laser beam 112 is a function of the diameter of the laser beam 112, with smaller input laser beam diameters requiring less offset to sufficiently break the symmetry. The magnitude of the offset (i.e., the offset distance) should be a significant percentage of the input Gaussian beam diameter. A Gaussian beam is often characterized by its $1/e^2$ diameter, which represents the radial distance from the beam center at which the beam intensity decays to 13.5% ($=1/e^2$) of its maximum intensity value. To effect the best results, the magnitude of the beam center-to-axicon center radial offset should be at least 30% of the $1/e^2$ beam diameter, but more preferably at least 50% of the $1/e^2$ beam diameter, and can even be 100% of the $1/e^2$ input beam diameter, provided the optical aperture of the aspheric optical element 120 and the downstream optics is large enough to accommodate the radial shift. In some embodiments, the laser beam 112 impinges the aspheric optical element 120 radially offset from the centerline axis 122 of the aspheric optical element 120 by an offset distance of 30% the $1/e^2$ diameter of the laser beam 112 or greater, for example 35% or greater, 40% or greater, 45% or greater, 50% or greater, 55% or greater, 60% or greater, 65% or greater, 70% or greater, 75% or greater, 80% or greater, 85% or greater, 90% or greater, 95% or greater, 100% or greater, 105% or greater, 110% or greater, 120% or greater, or the like.

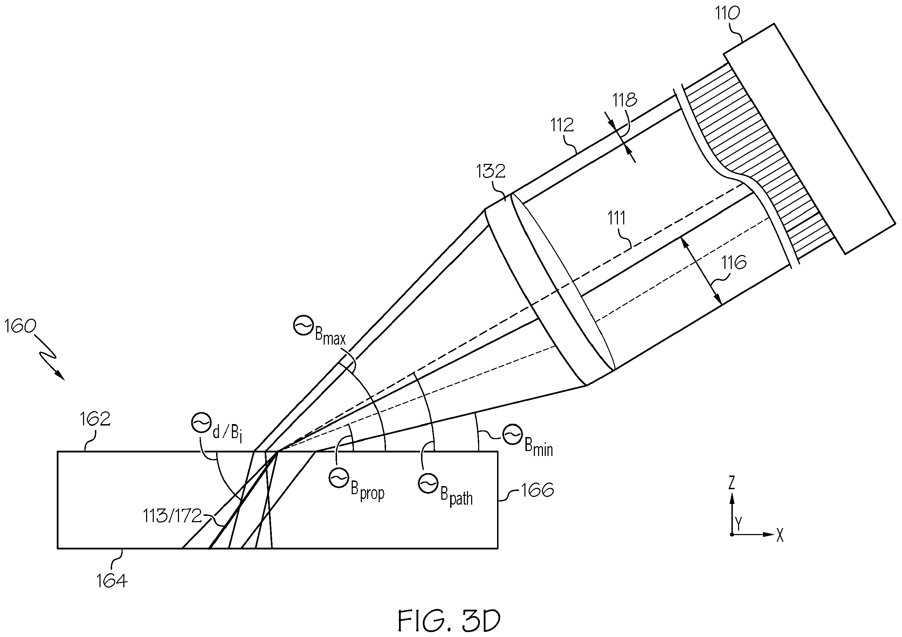

The direction of the laser beam 112 offset is determined by the plane of incidence, which is the plane containing both the optical axis of the angled beam and the surface normal. The direction of the radial offset of the laser beam 112 is within this plane of incidence. This radial offset will break the symmetry of the observed annulus, but whether this is seen by a viewer as asymmetry about a "horizontal" or "vertical" axis depends merely on the viewer orientation or perspective. The direction of the radial offset may be such that the majority of the optical energy passes through the optical assembly 100' in a manner that the average angle of incidence of the rays with respect to the surface normal be minimized. This will minimize the aberrations imparted in the laser beam 112. For example, referring to FIG. 3D, it is preferred to execute the radial offset such that more light intensity be present are angles near $\theta_{Bmax}$, and less light intensity be present at angles near $\theta_{Bmin}$. In some cases, the laser beam that illuminates the aspheric optical element may by elliptical in cross section. That is, the $1/e^2$ diameter of the this input beam may be greater if measured in one direction (e.g. the x-axis) and less in an orthogonal direction (e.g. the y-axis). It such a case, the magnitude of the beam offset required to affect the asymmetry is based upon the $1/e^2$ diameter in the direction containing the plane of incidence.

Referring to FIGS. 2B, 3B and 3C, a horizontal line may be drawn that bisects each image, passing through optical axis of the optical assembly 100, 100' (the center of each annulus, along the beam pathway 111). For an input beam that is perfectly centered on the aspheric optical element 120, the annular power distribution is perfectly symmetric, and the integrated power on each side of the bisecting line will be equal. As the input beam is offset vertically, the annular power distribution becomes increasingly asymmetric with respect to this bisecting line. To effect significant benefit for creating defects 172 in the transparent workpiece 160 at high incident angles, the magnitude of the input beam radial offset should be enough so that the difference in integrated power on each side of the bisecting line be at least 50%, for example, at least 75% and up to 100%. It should be understood that the above description of "horizontal" referring to a bisecting line drawn in the images in FIGS. 3A, 3B, and 3C, is not a reference to true horizontal or vertical in the optical assembly 100'.

It is generally desirable to execute the smallest radial offset possible that still allows one to form defects 172 through the full depth of material of the transparent workpiece 160 at a given substrate tilt angle. The larger the radial offset, the more asymmetric the beam cross section will become at the transparent workpiece 160. Such asymmetric cross section will lead to changes in the spatial distribution of the stress imparted by each defect 172. The more asymmetric the beam cross section, the more the stress profile will tend to create cracks that are oriented in a particular direction, which may not be the same direction as the intended part contour 170 to be cut. Hence there is a trade-off between offsetting the laser beam 112 radially to affect a stronger defect 172 through the full thickness of the glass transparent workpiece 160 and keeping the radial offset small enough such that the contour 170 orientation direction does not lead an inability to connect adjacent defects 172 and separate the transparent workpiece 160 along the contour 170. For example, for a $\theta_{Bi}$ near 80° (near normal incidence) with a thin transparent workpiece 160 (such as 400 $\mu$m thick), it may be desirable to only offset the input beam by 30% of the $1/e^2$ radius. But if the thickness of the transparent workpiece 160 increases to 700 $\mu$m, it may be preferable to increase the offset the input beam to 50% of the $1/e^2$ radius, and if $\theta_{Bi}$ is changed to 70° (further from normal incidence) it may be preferable to further increase the offset the input beam to 75% of the $1/e^2$ radius. For example, embodiments are contemplated in which the internal focal line angle is 75° or less relative to the impingement surface 162 and the transparent workpiece 160 comprises a thickness of 700 $\mu$m or greater and embodiments are contemplated in which the internal focal line angle is 65° or less relative to the impingement surface 162 and the transparent workpiece 160 comprises a thickness of 500 $\mu$m or greater.

In some embodiments, the offset distance a may be from about 100 $\mu$m to about 3000 mm, for example, 200 $\mu$m, 500 $\mu$m, 1000 $\mu$m, 2500 $\mu$m, or the like. In some embodiments, the offset distance a may be from about 200 $\mu$m to about 500 $\mu$m, or from about 500 $\mu$m to about 2000 $\mu$m, or the like. In some embodiments, the offset distance a may comprise a distance from 30% to 50%, or from 50% to 75%, or from 50% to 100% of a cross sectional diameter (i.e., the $1/e^2$ width) of the laser beam 112 at a contact location between the laser beam 112 and the aspheric optical element 120 (e.g., at the laser input surface 124 of the aspheric optical element 120). Referring now to FIGS. 3B and 3C schematic cross-sections of the laser beam 112 downstream the offset aspheric optical element 120 at a location along the beam pathway 111 between the first lens 131 and the second lens 132 are depicted. In FIG. 3B, the laser beam 112 is offset from the aspheric optical element 120 by a first offset distance and in FIG. 3C, the laser beam 112 is offset from the aspheric optical element 120 by a second offset distance that is greater than the first offset distance. As shown in FIGS. 3A and 3B, increasing the offset distance increases the asymmetry of radial intensity of the laser beam 112 downstream the offset aspheric optical element 120.

Referring now to FIG. 3D, a side view the laser beam 112 forming a laser beam focal line 113 having an internal beam angle $\theta_{Bi}$ relative to the impingement surface 162 of less than 80° using the optical assembly 100' of FIG. 3A is depicted. As depicted in FIG. 3D, the beam pathway 111 and the transparent workpiece 160 are tilted relative to one another such that the beam pathway angle $\theta_{Bpath}$ and the beam propagation angle $\theta_{Bprop}$ are each less than 90°. In particular, the beam pathway angle $\theta_{Bpath}$ and the beam propagation angle $\theta_{Bprop}$ are such that the internal beam angle $\theta_{Bi}$ of the laser beam focal line 113 is less than 80°. The laser beam 112 comprises a first set of light rays 116 and a second set of light rays 118 and because the laser beam 112 downstream the aspheric optical element 120 comprises non-uniform radial intensity, the first set of light rays 116 comprise a greater energy intensity than the second set of light rays 118. Further, as shown in FIG. 3D, the first set of light rays 116, which comprise a majority of the energy intensity of the laser beam 112, impinge the impingement surface at ray propagation angles that are each less than the beam pathway angle $\theta_{Bpath}$.

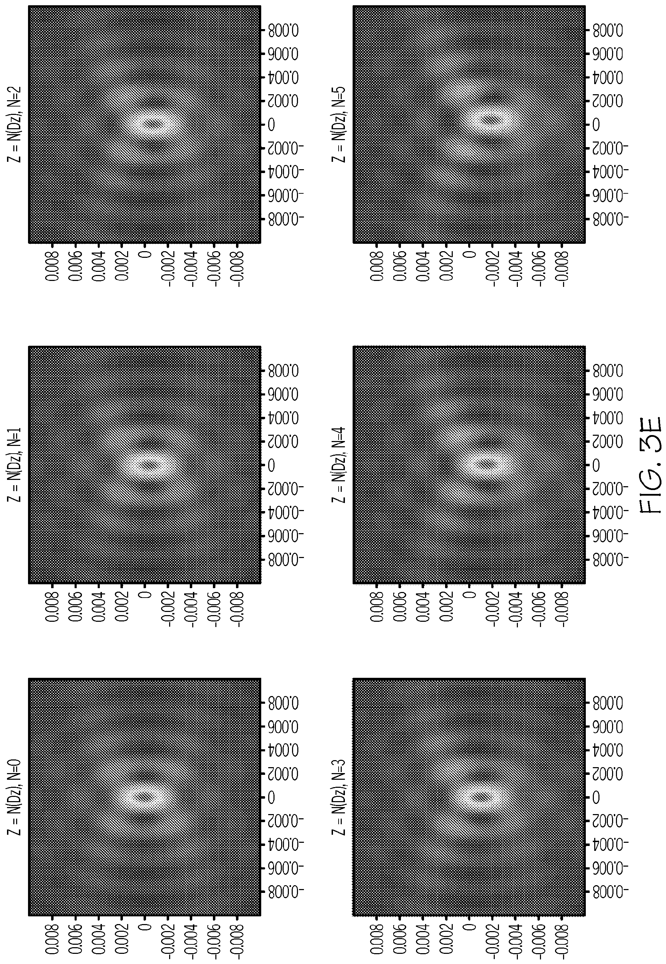

Referring now to FIG. 3E, cross sectional beam plots of the laser beam focal line 113 formed using the optical assembly 100' of FIG. 3A directed into the transparent workpiece 160 at a beam pathway angle $\theta_{Bpath}$ and a beam propagation angle $\theta_{Bprop}$ such that, after refraction at the impingement surface 162, the laser beam focal line 113 comprises an internal beam angle $\theta_{Bi}$ of 60°, are depicted. the cross sectional beam plots of FIG. 3E shows the energy density of the laser beam focal line 113 a number of depth positions Z within in the transparent workpiece defined by the equation $Z = N(Dz)$. In particular, the cross sectional beam plots of FIG. 3E shows the energy density of the laser beam focal line 113 a depth positions $Z = N(Dz)$, where $N = 0$, $N = 1$, $N = 2$, $N = 3$, $N = 4$, and $N = 5$, respectively.

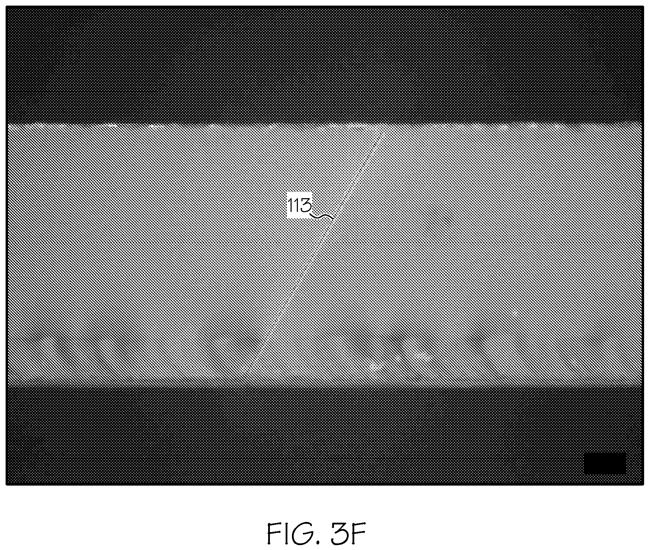

As shown in FIG. 3E, unlike the non-offset (i.e., non-biased beam) of FIG. 2A, in which the astigmatic aberrations dramatically increase at increasing depths in the transparent workpiece 160, the laser beam focal line 113 has minimally increasing astigmatic aberrations and exhibits a quasi non diffracting character. While some off-axis aberrations present, the central lobe of the laser beam focal line 113 remains largely unchanged and maintains enough energy through the length of the laser beam focal line 113 to generate induced absorption and form the defect 172, thus facilitating the formation of angled defects 172 having substantial lengths. Moreover, FIG. 3F depicts an example defect 172 having a defect angle $\theta_D$ of 60° formed with the optical assembly 100' of FIG. 3A and, as shown in FIG. 3F, the defect 172 extends the depth of the transparent workpiece 160.

To further illustrate, FIG. 3G depicts the intensity profile of the laser beam focal line 113 formed using the optical assembly 100' of FIG. 3A as it propagates in the transparent workpiece 160 when directed into the transparent workpiece 160 at a beam propagation angle $\theta_{Bprop}$ of 90° (i.e., normal) and FIG. 2H depicts the intensity profile of the laser beam focal line 113 formed using the optical assembly 100' of FIG. 3A as it propagates in the transparent workpiece 160 when directed into the transparent workpiece at an oblique beam propagation angle $\theta_{Bprop}$. As show by FIG. 2H, the oblique beam propagation angle $\theta_{Bprop}$ causes minimal to no increase in astigmatic aberrations at increasing depths in the transparent workpiece 160, thus retaining the peak intensity of the laser beam focal line 113 through the depth of the transparent workpiece.

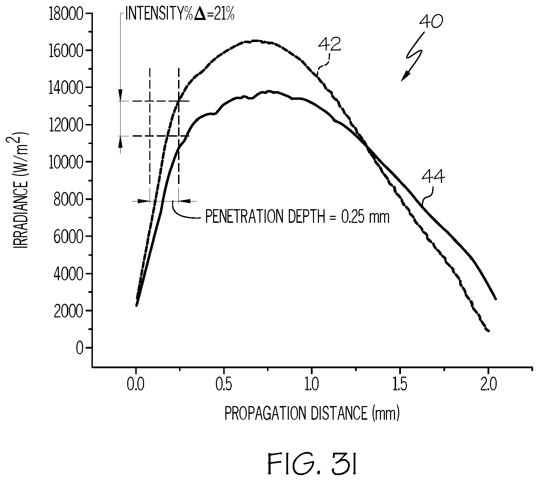

Referring now to FIG. 3I, a graph 40 shows depicts the irradiance of the laser beam focal line 113 formed using the optical assembly 100 of FIG. 3A as it propagates in the transparent workpiece 160 when directed into the transparent workpiece 160 at a beam propagation angle $\theta_{Bprop}$ of 90° (line 42) and when directed into the transparent workpiece at an oblique beam propagation angle $\theta_{Bprop}$ (line 44) as a function of propagation distance within the transparent workpiece 160. As shown by graph 40, after a propagation distance of 250 $\mu$m, the irradiance of the obliquely formed laser beam focal line 113 (line 24) decreases by 21% when compared to the normally formed laser beam focal line 113 (line 22) at a propagation distance of 250 $\mu$m. Comparing graph 40 of FIG. 3I with graph 20 of FIG. 2I shows the improvement in irradiation at increasing depths of the angled laser beam focal line 113 formed using the optical assembly 100' of 3A when compared to an angled laser beam focal line formed using the optical assembly 100 of FIG. 2A.

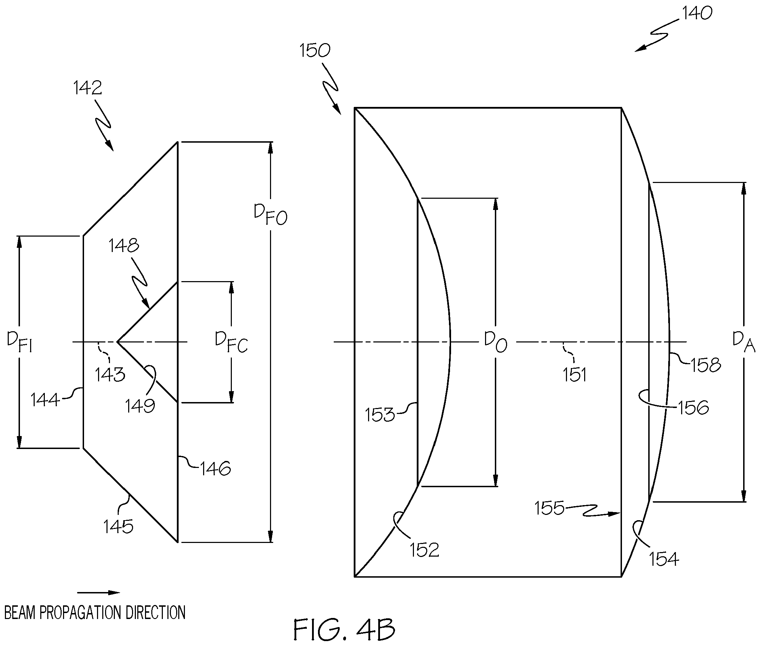

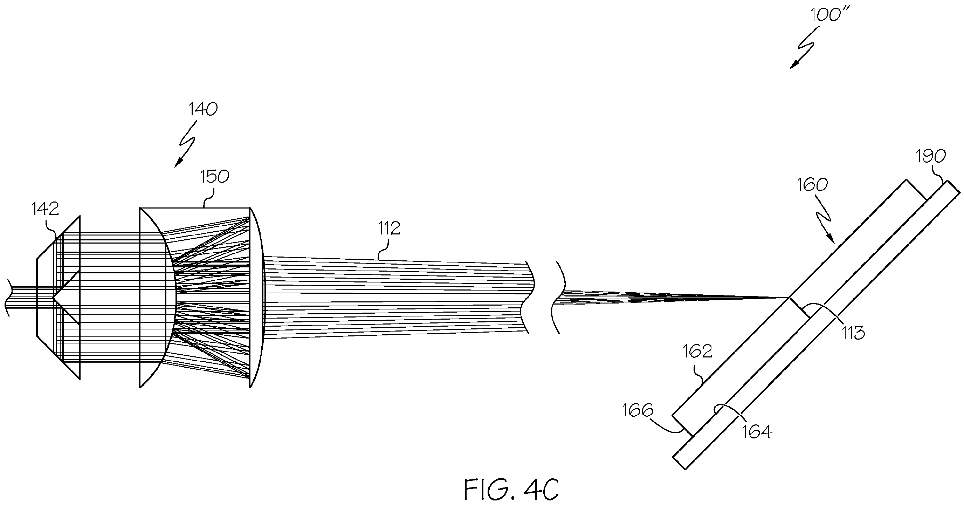

Referring now to FIG. 4A-4C, the optical assembly 100" is depicted. As shown in FIG. 4A, the optical assembly 100" comprises a multi-optic axicon assembly 140 (depicted in more detail in FIGS. 4B and 4C) disposed along the beam pathway 111 between the beam source 110 and the transparent workpiece 160. The multi-optic axicon assembly 140 comprises a lens axicon 150 positioned downstream a frustum optical element 142. As depicted in FIG. 4A, the beam source 110 is optically coupled to the multi-optic axicon assembly 140. In some embodiments, a transport optical fiber 192 may extend between and optically couple the beam source 110 and the frustum optical element 142, for example, an input surface 144 of the frustum optical element 142. The transport optical fiber 192 may steer the laser beam 112 and allow the beam source 110 to be located in any position relative to the multi-optic axicon assembly 140. In other embodiments, the beam source 110 may be optically coupled to the multi-optic axicon assembly 140 through free space, which may or may not include additional intervening optical components, such as lenses, mirrors, or the like.

While the frustum optical element 142 and the lens axicon 150 are depicted as two separate optical components in FIG. 4A and 4B, in some embodiments, the frustum optical element 142 and the lens axicon 150 are integrated as a monolith such that the multi-optic axicon assembly 140 comprises a monolithic lens system. In other embodiments, the multi-optic axicon assembly 140 can be modular to support additional shaping optics and to facilitate independent movement of each of the frustum optical element 142 and the lens axicon 150, for example, using one or more alignment mechanisms 190 configured to alter the spacing distance between the frustum optical element 142 and the lens axicon 150. As depicted in FIG. 4A, a first alignment mechanism 190a may be coupled to the frustum optical element 142 and a second alignment mechanism 190b may be coupled to the lens axicon 150. The first alignment mechanism 190a is configured to translate the frustum optical element 142 along the beam pathway 111, for example, toward the lens axicon 150 or away from the lens axicon 150 and the second alignment mechanism 190b is configured to translate the lens axicon 150 along the beam pathway 111, for example, toward the frustum optical element 142 or away from the frustum optical element 142.

Referring now to FIG. 4B, the lens axicon 150 and the frustum optical element 142 of the multi-optic axicon assembly 140 are depicted in more detail. The frustum optical element 142 comprises an input surface 144 having an input surface diameter $D_{FI}$, an output surface 146 having an output surface diameter $D_{FO}$, an outer surface 145 extending from input surface 144 to the output surface 146, and a reflective cone 148 extending into the output surface 146 and comprising a reflective cone surface 149. The frustum optical element 142 may comprise a crystalline material, a polymer material, a glass material, or the like, for example, quartz, fused silica, barium fluoride, calcium fluoride, zinc selenide, BK7 optical glass, or the like. The frustum optical element 142 may be formed by a process that includes diamond turning, molding, and polishing.

In some embodiments, the input surface 144, the output surface 146, or both are coated with an anti-reflective material, for example, a dielectric anti-reflective material arranged in a quarter wave stack. Further, the reflective cone surface 149 comprises a reflective material, for example, a metal such as gold, aluminum, copper, or a dielectric reflective material. The reflective cone 148 comprises a base diameter $D_{FC}$ and a reflective cone surface 149 that is parallel with the outer surface 145. As shown in FIG. 4B, the frustum optical element 142 comprises a frustum conical shape such that the output surface diameter $D_{FO}$ is greater than the input surface diameter $D_{FI}$. For example, the output surface diameter $D_{FO}$ is from 0.5 mm to 100 mm, such as 1 mm, 2 mm, 4 mm, 10 mm, 25 mm, 50 mm, or the like and the output surface diameter $D_{FO}$ is from 1.1 to 100 times larger than the base diameter $D_{FC}$. The frustum optical element 142 comprises a centerline 143 and the reflective cone 148 is radially symmetric about the centerline 143. In some embodiments, the base diameter $D_{FC}$ of the reflective cone 148 is greater than or equal to the diameter of the laser beam 112 upstream the frustum optical element 142. Further, both the outer surface 145 and the reflective cone surface 149 may be angled 45° with respect to the beam pathway 111.

Referring still to FIG. 4B, the lens axicon 150 comprises an input surface 152 and an output surface 154 and a centerline 151 about which the lens axicon 150 is radially symmetric. As shown in FIG. 4B, the centerline 151 of the lens axicon 150 is aligned with the centerline 143 of the frustum optical element 142. The input surface 152 comprises a central convex reflector 153 and the output surface 154 comprises a reflective convex aperture 155. The central convex reflector 153 comprises an obscuration diameter $D_O$ and is radially symmetric about the centerline 151. Further, the reflective convex aperture 155 comprises a reflective ring 156 surrounding a central aperture 158 having an aperture diameter $D_A$. In the embodiment depicted in FIG. 4B, the obscuration diameter Do is the same as the aperture diameter $D_A$, however, in some embodiments, the obscuration diameter Do is greater than the aperture diameter $D_A$, and in some embodiments, the obscuration diameter Do is less than the aperture diameter $D_A$. Furthermore, in some embodiments, the lens axicon 150 comprises a negative spherical aberrated phase.

Referring now to FIG. 4C, in operation, the laser beam 112 enters the frustum optical element 142 through the input surface 144, impinges the reflective cone 148 and is reflected by the reflective cone surface 149 of the reflective cone 148 toward the outer surface 145. Next, the light rays of the laser beam 112 undergo total internal reflection at the outer surface 145, which directs the light rays of the laser beam 112 toward the output surface 146, where the laser beam 112 exits the frustum optical element 142. The process of directing the laser beam 112 through the frustum optical element 142 collimates the laser beam 112, such the laser beam 112 is collimated when the laser beam 112 reaches the lens axicon 150. In other words, the frustum optical element 142 converts an input Gaussian plane wave (i.e., the laser beam 112 upstream the frustum optical element 142) into a collimated annulus beam (i.e., the laser beam 112 between the frustum optical element 142 and the lens axicon 150). Without the frustum optical element 142 controlling the diameter of the collimated annulus beam (e.g., the laser beam 112 upon exiting the frustum optical element 142) that impinges the lens axicon 150, some of the power of the laser beam would be lost due to shadowing and vingetting by the central convex reflector 153 of the lens axicon 150. For example, without the frustum optical element 142, the laser beam 112 could lose from 25% to 50% of its laser power at the lens axicon 150, for example 33% of its laser power.

Referring still to FIG. 4C, the laser beam 112 (as a collimated annulus) propagates from the frustum optical element 142 into the lens axicon 150 and subsequently reflects off the reflective convex aperture 155 and the central convex reflector 153 before exiting the lens axicon 150 as a quasi-non-diffracting beam. However, unlike the quasi-non-diffracting beam formed using the optical assembly 100 of FIG. 2A, after traversing the multi-optic axicon assembly 140 of the optical assembly 100" of FIG. 4A, the laser beam 112 retains its quasi-non-diffracting character once refracted into the transparent workpiece 160 such that the laser beam focal line 113 may comprise an internal beam angle $\theta_{Bi}$ of less than 80° relative to the impingement surface 162 of the transparent workpiece 160 and may laser forms a defect 172 comprising a defect angle $\theta_D$ within the transparent workpiece 160 of less than 80° relative to the impingement surface 162. Indeed, after traversing the multi-optic axicon assembly 140, the laser beam 112 is resilient against the formation of astigmatic aberrations once refracted into the transparent workpiece 160 at oblique angles.

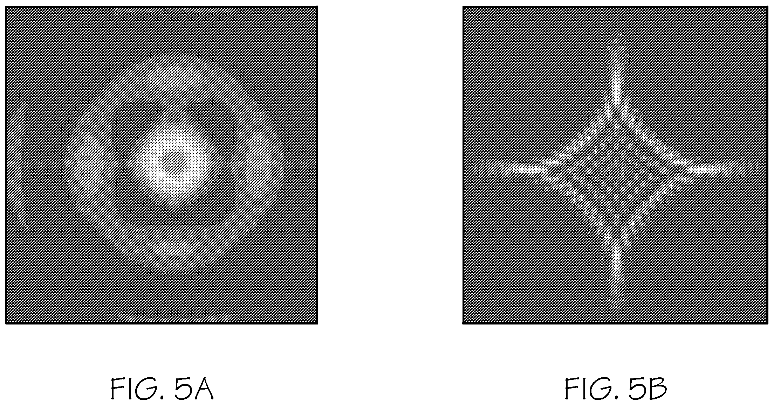

Referring now to FIGS. 5A-5H, cross sectional beam plots of laser beam focal lines formed using a variety of optical components in an example transparent workpiece that is tilted 35° relative to the beam pathway 111 is shown. First, the cross sectional beam plots of FIGS. 5A and 5B show the energy density of the laser beam focal line that is formed using the optical assembly 100 of FIG. 2A and is directed into an example transparent workpiece tilted 35° relative to the beam pathway 111 at a depth of 0.1 mm within the example transparent workpiece (FIG. 5A) and at a depth of 1.9 mm within the example transparent workpiece (FIG. 5B). As shown FIG. 5A, the laser beam focal line has negligible distortions (e.g., astigmatic aberrations) at a depth of 0.1 mm but these astigmatic aberrations increase at increasing depths. For example, at depths of greater than 0.3 mm the astigmatic aberrations overwhelm the central lobe and thus, while not intending to be limited by theory, the optical intensity is too low at the central lobe to form a defect and/or the energy of the astigmatic aberrations cause unwanted damage extending from the defect into the bulk of the example transparent workpiece. Further, FIG. 5B shows that at a depth of 1.9 mm within the transparent workpiece 160, the laser beam focal line has substantial astigmatic aberrations.

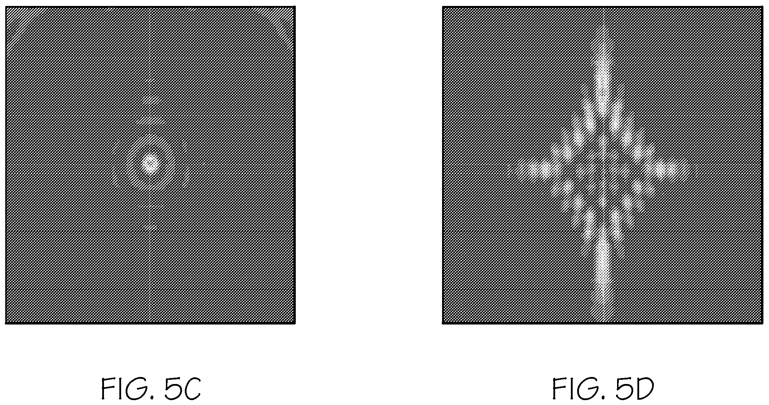

Next, the cross sectional beam plots of FIGS. 5C and 5D show the energy density of a laser beam focal line that is formed using the frustum optical element 142 of the multi-optic axicon assembly 140 of the optical assembly 100" of FIG. 4A, without using the lens axicon 150, and is directed into an example transparent workpiece tilted 35° relative to the beam pathway 111 at a depth of 0.1 mm within the example transparent workpiece (FIG. 5C) and at a depth of 1.9 mm within the transparent workpiece (FIG. 5D). As shown FIG. 5C, the laser beam focal line has negligible distortions (e.g., astigmatic aberrations) at a depth of 0.1 mm but these astigmatic aberrations increase at increasing depths. For example, at depths of greater than 0.3 mm the astigmatic aberrations overwhelm the central lobe. FIG. 5D shows that at a depth of 1.9 mm within the example transparent workpiece, the laser beam focal line has substantial astigmatic aberrations.

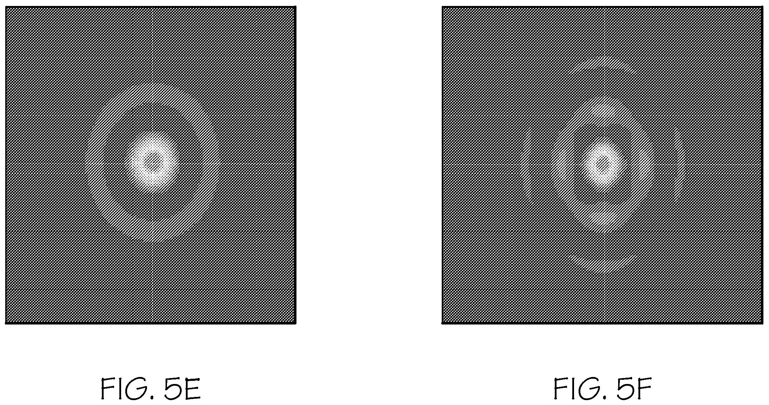

The cross sectional beam plots of FIGS. 5E and 5F show the energy density of a laser beam focal line that is formed using the lens axicon 150 of the multi-optic axicon assembly 140 of the optical assembly 100" of FIG. 4A, without using the frustum optical element 142, and is directed into an example transparent workpiece tilted 35° relative to the beam pathway 111 at a depth of 0.1 mm within the example transparent workpiece (FIG. 5E) and at a depth of 1.9 mm within the example transparent workpiece (FIG. 5F). As shown FIG. 5E, the laser beam focal line has negligible distortions (e.g., astigmatic aberrations) at a depth of 0.1 mm and the astigmatic aberrations only minimally increase at increasing depths. While not intending to be limited by theory, the accumulated negative spherical aberration of the lens axicon 150 results in a laser beam resilient to astigmatic aberrations at high angles. Indeed, FIG. 5F shows that at a depth of 1.9 mm within the transparent workpiece 160, the laser beam focal line has a minimal increase in astigmatic aberrations, maintains high energy density in the central lobe, and maintains its quasi-non diffracting character. However, because the cross sectional beam plots of FIGS. 5E and 5F are formed without the use of the frustum optical element 142, the laser beam loses some laser power at the lens axicon 150 because the beam is not first shaped to correspond with the size of the lens axicon 150. As described above, including the frustum optical element 142 with the lens axicon 150 minimizes this laser power loss.

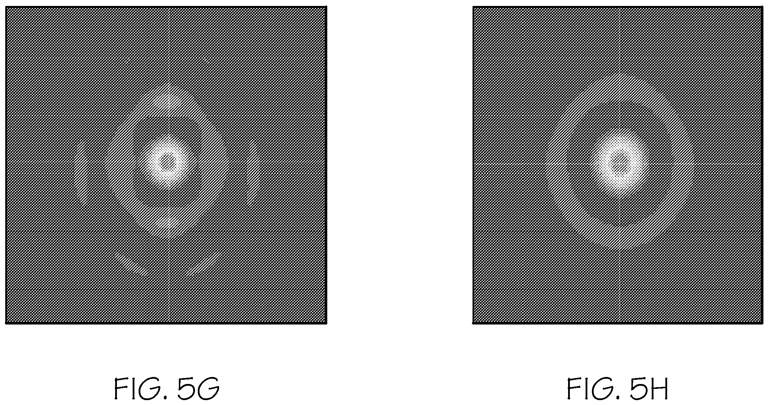

For example, the cross sectional beam plots of FIGS. 5G and 5H show the energy density of a laser beam focal line that is formed using both the frustum optical element 142 and the lens axicon 150 of the multi-optic axicon assembly 140 of the optical assembly 100" of FIG. 4A and is directed into an example transparent workpiece tilted 35° relative to the beam pathway 111 at a depth of 0.1 mm within the example transparent workpiece (FIG. 5G) and at a depth of 1.9 mm within the transparent workpiece (FIG. 5H). As shown FIG. 5G, the laser beam focal line has negligible distortions (e.g., astigmatic aberrations) at a depth of 0.1 mm and the astigmatic aberrations only minimally increase at increasing depths due to the accumulated negative spherical aberration of the lens axicon 150. FIG. 5F shows that at a depth of 1.9 mm within the transparent workpiece 160, the laser beam focal line has a minimal increase in astigmatic aberrations, maintains high energy density in the central lobe, and maintains its quasi-non diffracting character. Moreover, because of the presence of the frustum optical element 142, minimal laser power is lost at the lens axicon 150. Thus, using both the frustum optical element 142 into the lens axicon 150 to modify the laser beam minimizes both astigmatic aberrations and energy loss when the laser beam 112 is refracted into the transparent workpiece 160.

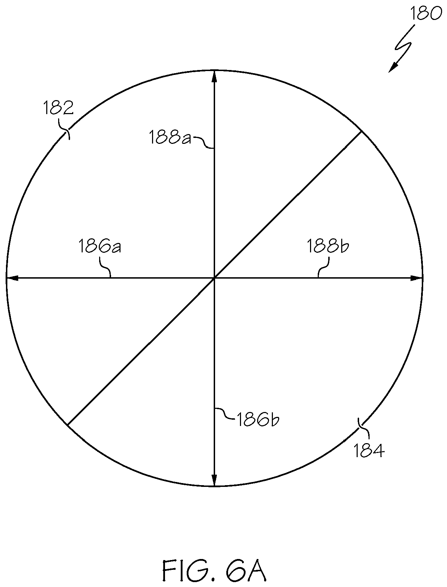

Referring now to FIG. 6A, the multi-optic axicon assembly 140 of FIG. 4A may also includes a split quarter waveplate 180 positioned between the frustum optical element 142 and the lens axicon 150. The split quarter waveplate 180 comprises a first plate portion 182 having a first fast axis 186a and a first slow axis 188a. The split quarter waveplate 180 also comprises a second plate portion 184 having a second fast axis 186b and a second slow axis 188b. The first fast axis 186a is orthogonal to the second fast axis 186b and the first slow axis 188a is orthogonal to the second slow axis 188b. When the laser beam 112 traverses the split quarter waveplate 180, the first plate portion 182 having the first fast axis 186a and first slow axis 188a polarizes a first beam portion of the laser beam 112 into a first polarization (e.g., a specific horizontal, vertical, or circular polarization) and the second plate portion 184 having the second fast axis 186b polarizes a second beam portion of the laser beam 112 into a second polarization (e.g., another specific horizontal, vertical, or circular polarization). Polarizing the first beam portion to a first polarization and polarizing the second beam portion to a second polarization that is orthogonal the second beam portion decoheres the first beam portion from the second beam portion.

Further, the first polarization is orthogonal to the second polarization such that the first beam portion and the second beam portion combine incoherently downstream from the split quarter waveplate 180 such that the beam spot 114 formed on the impingement surface 162 of the transparent workpiece 160 is non-axisymmetric. While not intending to be limited by theory, two laser beam portions having orthogonal polarizations (e.g., vertical and horizontal, right-handed circular and left-handed circular) do not interfere and, when each are projected onto the transparent workpiece 160, each beam portion combines incoherently and collectively form a non-axisymmetric beam spot 114 (e.g., an ellipse). As an illustrative example, the first polarization and the second polarization each comprise a location on a Poincaré Sphere positioned apart by about 180° such that they are orthogonal. It should be understood that incoherent combination between the first and second beam portions may occur with any two orthogonal polarizations.

Referring now to FIG. 6B, a cross section beam plot of the laser beam focal line 113 formed using a multi-optic axicon assembly 140 that includes the split quarter waveplate 180 is depicted. In particular, the cross sectional beam plots of FIG. 6B shows the energy density of the laser beam focal line 113 within the transparent workpiece 160. As shown in FIG. 6B, the energy density is non-axisymmetric and has an elliptical shape having a long axis and a short axis. This elliptical shape helps form defects 172 that have a central defect region formed at the intersection of the long axis and the short axis and one or more radial arms formed in the direction of the long axis. In operation, the laser beam focal line 113 oriented such that the long axis of the beam spot 114 extends along the contour line 165 thereby forming defects 172 with radial arms that extend along the contour line 165. By controlling the laser beam focal line 113 such that the direction of the radial arms of each defect 172 extends along the contour line 165, crack propagation may be better controlled.

Referring again to FIGS. 1A-6B, in operation, the laser beam 112 may be translated relative to the transparent workpiece 160 (e.g., in the translation direction 101) along the contour line 165 to form the plurality of defects 172 of the contour 170. Directing or localizing the laser beam 112 into the transparent workpiece 160 generates an induced absorption within the transparent workpiece 160 and deposits enough energy to break chemical bonds in the transparent workpiece 160 at spaced locations along the contour line 165 to form the defects 172, each comprising a defect angle

$\theta_D$ that is less than 80° relative to the impingement surface 162. According to one or more embodiments, the laser beam 112 may be translated across the transparent workpiece 160 by motion of the transparent workpiece 160 (e.g., motion of an alignment mechanism 190 coupled to the transparent workpiece 160, as shown in FIG. 3A), motion of the laser beam 112 (e.g., motion of the laser beam focal line 113), or motion of both the transparent workpiece 160 and the laser beam focal line 113.

The defects 172 may generally be spaced apart from one another by a distance along the contour 170 of from about 0.1 μm to about 500 μm, for example, about 1 μm to about 200 μm, about 2 μm to about 100 μm, about 5 μm to about 20 μm, or the like. For example, suitable spacing between the defects 172 may be from about 0.1 μm to about 50 μm, such as from about 5 μm to about 15 μm, from about 5 μm to about 12 μm, from about 7 μm to about 15 μm, or from about 7 μm to about 12 μm for the TFT/display glass compositions. In some embodiments, a spacing between adjacent defects 172 may be about 50 μm or less, 45 μm or less, 40 μm or less, 35 μm or less, 30 μm or less, 25 μm or less, 20 μm or less, 15 μm or less, 10 μm or less, or the like.

As illustrated in FIGS. 1A and 1B, the plurality of defects 172 of the contour 170 extend into the transparent workpiece 160 and establish a path for crack propagation for separation of the transparent workpiece 160 into separate portions along the contour 170. Forming the contour 170 comprises translating the laser beam 112 relative to the transparent workpiece 160 (e.g., in the translation direction 101) along the contour line 165 to form the plurality of defects 172 of the contour 170. According to one or more embodiments, the laser beam 112 may be translated across the transparent workpiece 160 by motion of the transparent workpiece 160, motion of the laser beam 112 (e.g., motion of the laser beam focal line 113), or motion of both the transparent workpiece 160 and the laser beam 112, for example, using one or more alignment mechanisms 190 (FIG. 3A), such as translation stages, gantry arms, or the like. By translating the laser beam focal line 113 relative to the transparent workpiece 160, the plurality of defects 172 may be formed in the transparent workpiece 160, wherein each of the plurality of defects 172, each comprising a defect angle $\theta_D$ that is less than 10° relative to the impingement surface 162.

Suitable laser wavelengths for forming defects 172 are wavelengths at which the combined losses of linear absorption and scattering by the transparent workpiece 160 are sufficiently low. In embodiments, the combined losses due to linear absorption and scattering by the transparent workpiece 160 at the wavelength are less than 20%/mm, or less than 15%/mm, or less than 10%/mm, or less than 5%/mm, or less than 1%/mm, where the dimension "/mm" means per millimeter of distance within the transparent workpiece 160 in the beam propagation direction of the laser beam 112 (e.g., the Z direction). Representative wavelengths for many glass workpieces include fundamental and harmonic wavelengths of Nd$^{3+}$ (e.g. Nd$^{3+}$:YAG or Nd$^{3+}$:YVO$_4$ having fundamental wavelength near 1064 nm and higher order harmonic wavelengths near 532 nm, 355 nm, and 266 nm). Other wavelengths in the ultraviolet, visible, and infrared portions of the spectrum that satisfy the combined linear absorption and scattering loss requirement for a given substrate material can also be used.

In operation, the laser beam 112 output by the beam source 110 may create multiphoton absorption (MPA) in the transparent workpiece 160. MPA is the simultaneous absorption of two or more photons of identical or different frequencies that excites a molecule from one state (usually the ground state) to a higher energy electronic state (i.e., ionization). The energy difference between the involved lower and upper states of the molecule is equal to the sum of the energies of the involved photons. MPA, also called induced absorption, can be a second-order or third-order process (or higher order), for example, that is several orders of magnitude weaker than linear absorption. It differs from linear absorption in that the strength of second-order induced absorption may be proportional to the square of the light intensity, for example, and thus it is a nonlinear optical process.

The perforation step that creates the contour 170 (FIGS. 1A and 1B) may utilize the beam source 110 (e.g., a pulsed beam source such as an ultra-short pulse laser) in combination with the aspheric optical element 120, the first lens 131, and the second lens 132, to irradiate the transparent workpiece 160 and generate the laser beam focal line 113. The laser beam focal line 113 comprises a quasi-non-diffracting beam, such as a Gauss-Bessel beam or Bessel beam, as defined above, and may fully or partially perforate the transparent workpiece 160 to form defects 172, each comprising a defect angle $\theta_D$ that is less than 80° relative to the impingement surface 162, in the transparent workpiece 160, which may form the contour 170. In embodiments in which the laser beam 112 comprises a pulsed laser beam, the pulse duration of the individual pulses is in a range of from about 1 femtosecond to about 200 picoseconds, such as from about 1 picosecond to about 100 picoseconds, 5 picoseconds to about 20 picoseconds, or the like, and the repetition rate of the individual pulses may be in a range from about 1 kHz to 4 MHz, such as in a range from about 10 kHz to about 3 MHz, or from about 10 kHz to about 650 kHz.

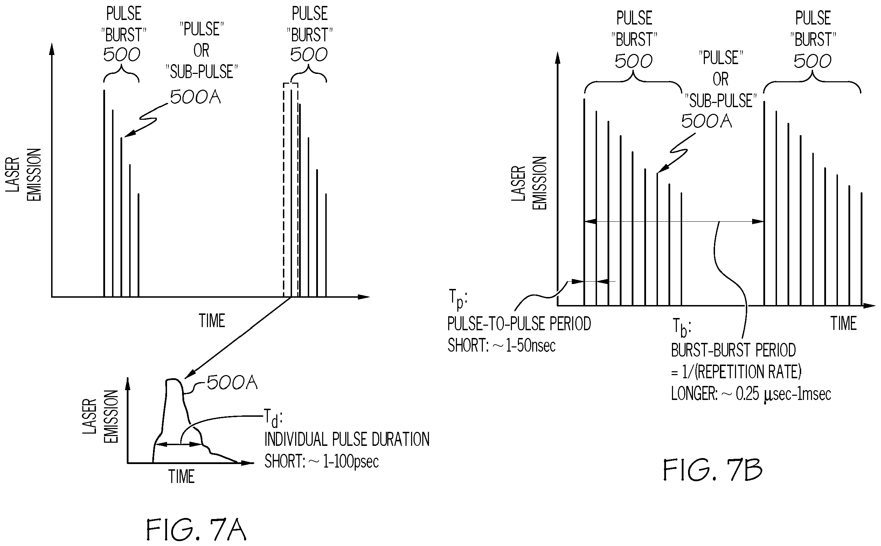

Referring now to FIGS. 7A and 7B, in addition to a single pulse operation at the aforementioned individual pulse repetition rates, in embodiments comprising a pulsed laser beam, the pulses may be produced in pulse bursts 500 of two sub-pulses 500A or more (such as, for example, 3 sub-pulses, 4 sub-pulses, 5 sub-pulses, 10 sub-pulses, 15 sub-pulses, 20 sub-pulses, or more per pulse burst, such as from 1 to 30 sub-pulses per pulse burst 500, or from 5 to 20 sub-pulses per pulse burst 500). While not intending to be limited by theory, a pulse burst is a short and fast grouping of sub-pulses that creates an optical energy interaction with the material (i.e. MPA in the material of the transparent workpiece 160) on a time scale not easily accessible using a single-pulse operation. While still not intending to be limited by theory, the energy within a pulse burst (i.e. a group of pulses) is conserved. As an illustrative example, for a pulse burst having an energy of 100 $\mu$J/burst and 2 sub-pulses, the 100 $\mu$J/burst energy is split between the 2 pulses for an average energy of 50 $\mu$J per sub-pulse and for a pulse burst having an energy of 100 $\mu$J/burst and 10 sub-pulses, the 100 $\mu$J/burst is split amongst the 10 sub-pulses for an average energy of 10 $\mu$J per sub-pulse. Further, the energy distribution among the sub-pulses of a pulse burst does not need to be uniform. In fact, in some instances, the energy distribution among the sub-pulses of a pulse burst is in the form of an exponential decay, where the first sub-pulse of the pulse burst contains the most energy, the second sub-pulse of the pulse burst contains slightly less energy, the third sub-pulse of the pulse burst contains even less energy, and so on. However, other energy distributions within an individual pulse burst are also possible, where the exact energy of each sub-pulse can be tailored to effect different amounts of modification to the transparent workpiece 160.

While still not intending to be limited by theory, when the defects 172 of the one or more contours 170 are formed with pulse bursts having at least two sub-pulses, the force necessary to separate the transparent workpiece 160 along the contour 170 (i.e. the maximum break resistance) is reduced compared to the maximum break resistance of a contour 170 with the same spacing between adjacent defects 172 in an identical transparent workpiece 160 that is formed using a single pulse laser. For example, the maximum break resistance of a contour 170 formed using a single pulse is at least two times greater than the maximum break resistance of a contour 170 formed using a pulse burst having 2 or more sub-pulses. Further, the difference in maximum break resistance between a contour 170 formed using a single pulse and a contour 170 formed using a pulse burst having 2 sub-pulses is greater than the difference in maximum break resistance between a contour 170 formed using a pulse burst having 2 sub-pulses and a pulse burst having 3 sub-pulses. Thus, pulse bursts may be used to form contours 170 that separate easier than contours 170 formed using a single pulse laser.

Referring still to FIGS. 7A and 7B, the sub-pulses 500A within the pulse burst 500 may be separated by a duration that is in a range from about 1 nsec to about 50 nsec, for example, from about 10 nsec to about 30 nsec, such as about 20 nsec. In other embodiments, the sub-pulses 500A within the pulse burst 500 may be separated by a duration of up to 100 psec (for example, 0.1 psec, 5 psec, 10 psec, 15 psec, 18 psec, 20 psec, 22 psec, 25 psec, 30 psec, 50 psec, 75 psec, or any range therebetween). For a given laser, the time separation $T_p$ (FIG. 4B) between adjacent sub-pulses 500A within a pulse burst 500 may be relatively uniform (e.g., within about 10% of one another). For example, in some embodiments, each sub-pulse 500A within a pulse burst 500 is separated in time from the subsequent sub-pulse by approximately 20 nsec (50 MHz). Further, the time between each pulse burst 500 may be from about 0.25 microseconds to about 1000 microseconds, e.g., from about 1 microsecond to about 10 microseconds, or from about 3 microseconds to about 8 microseconds.

In some of the exemplary embodiments of the beam source 110 described herein, the time separation $T_b$ (FIG. 7B) is about 5 microseconds for the beam source 110 outputting a laser beam 112 comprising a burst repetition rate of about 200 kHz. The laser burst repetition rate is related to the time $T_b$ between the first pulse in a burst to the first pulse in the subsequent burst (laser burst repetition rate = $1/T_b$). In some embodiments, the laser burst repetition rate may be in a range of from about 1 kHz to about 4 MHz. In embodiments, the laser burst repetition rates may be, for example, in a range of from about 10 kHz to 650 kHz. The time $T_b$ between the first pulse in each burst to the first pulse in the subsequent burst may be from about 0.25 microsecond (4 MHz burst repetition rate) to about 1000 microseconds (1 kHz burst repetition rate), for example from about 0.5 microseconds (2 MHz burst repetition rate) to about 40 microseconds (25 kHz burst repetition rate), or from about 2 microseconds (500 kHz burst repetition rate) to about 20 microseconds (50k Hz burst repetition rate). The exact timing, pulse duration, and burst repetition rate may vary depending on the laser design, but short pulses ($T_d$ <20 psec and, in some embodiments, $T_d \leq$ 15 psec) of high intensity have been shown to work particularly well.

The burst repetition rate may be in a range of from about 1 kHz to about 2 MHz, such as from about 1 kHz to about 200 kHz. Bursting or producing pulse bursts 500 is a type of laser operation where the emission of sub-pulses 500A is not in a uniform and steady stream but rather in tight clusters of pulse bursts 500. The pulse burst laser beam may have a wavelength selected based on the material of the transparent workpiece 160 being operated on such that the material of the transparent workpiece 160 is substantially transparent at the wavelength. The average laser power per burst measured at the material may be at least about 40 $\mu$J per mm of thickness of material. For example, in embodiments, the average laser power per burst may be from about 40 $\mu$J/mm to about 2500 $\mu$J/mm, or from about 500 $\mu$J/mm to about 2250 $\mu$J/mm. In a specific example, for 0.5 mm to 0.7 mm thick Corning EAGLE XG® transparent workpiece, pulse bursts of from about 300 $\mu$J to about 600 $\mu$J may cut and/or separate the workpiece, which corresponds to an exemplary range of about 428 $\mu$J/mm to about 1200 $\mu$J/mm (i.e., 300 $\mu$J/0.7 mm for 0.7 mm EAGLE XG® glass and 600 $\mu$J/0.5 mm for a 0.5 mm EAGLE XG® glass).

The energy required to modify the transparent workpiece 160 is the pulse energy, which may be described in terms of pules burst energy (i.e., the energy contained within a pulse burst 500 where each pulse burst 500 contains a series of sub-pulses 500A), or in terms of the energy contained within a single laser pulse (many of which may comprise a burst). The pulse energy (for example, pulse burst energy) may be from about 25 μJ to about 750 μJ, e.g., from about 50 μJ to about 500 μJ, or from about 50 μJ to about 250 μJ. For some glass compositions, the pulse energy (e.g., pulse burst energy) may be from about 100 μJ to about 250 μJ. However, for display or TFT glass compositions, the pulse energy (e.g., pulse burst energy) may be higher (e.g., from about 300 μJ to about 500 μJ, or from about 400 μJ to about 600 μJ, depending on the specific glass composition of the transparent workpiece 160).

While not intending to be limited by theory, the use of a laser beam 112 comprising a pulsed laser beam capable of generating pulse bursts is advantageous for cutting or modifying transparent materials, for example glass (e.g., the transparent workpiece 160). In contrast with the use of single pulses spaced apart in time by the repetition rate of the single-pulsed laser, the use of a burst sequence that spreads the pulse energy over a rapid sequence of pulses within the burst allows access to larger timescales of high intensity interaction with the material than is possible with single-pulse lasers. The use of pulse bursts (as opposed to a single pulse operation) increases the size (e.g., the cross-sectional size) of the defects 172, which facilitates the connection of adjacent defects 172 when separating transparent workpiece 160 along the one or more contours 170, thereby minimizing unintended crack formation. Further, using a pulse burst to form defects 172 increases the randomness of the orientation of cracks extending outward from each defect 172 into the bulk material of the transparent workpiece 160 such that individual cracks extending outward from defects 172 do not influence or otherwise bias the separation of the contour 170 such that separation of the defects 172 follows the contour 170, minimizing the formation of unintended cracks.

Referring again to FIGS. 1A-6B, in some embodiments, the transparent workpiece 160 may be further acted upon in a subsequent separating step to induce separation of the transparent workpiece 160 along the contour 170 to form a separated transparent article comprising an angled edge (FIGS. 8A-10B). The subsequent separating step may include using mechanical force, thermal stress induced force, or a chemical etchant to propagate a crack along the contour 170. The thermal source, such as an infrared laser beam, may be used to create thermal stress and thereby separate the transparent workpiece 160 along the contour 170. Separating the transparent workpiece 160 may include directing an infrared laser beam at the contour 170 to induce thermal stress to propagate a crack along the contour 170. In some embodiments, the infrared laser beam may be used to initiate separation and then the separation may be finished mechanically. Without being bound by theory, the infrared laser is a controlled heat source that rapidly increases the temperature of the transparent workpiece 160 at or near the contour 170. This rapid heating may build compressive stress in the transparent workpiece 160 on or adjacent to the contour 170. Since the area of the heated glass surface is relatively small compared to the overall surface area of the transparent workpiece 160, the heated area cools relatively rapidly. The resultant temperature gradient induces tensile stress in the transparent workpiece 160 sufficient to propagate a crack along the contour 170 and through the depth of the transparent workpiece 160, resulting in full separation of the transparent workpiece 160 along the contour 170. Without being bound by theory, it is believed that the tensile stress may be caused by expansion of the glass (i.e., changed density) in portions of the workpiece with higher local temperature.

Suitable infrared lasers to create thermal stress in glass would typically have wavelengths that are readily absorbed by glass, typically having wavelengths ranging from 1.2 μm to 13 μm, for example, a range of 4 μm to 12 μm. Further, the power of the infrared laser beam may be from about 10 W to about 1000 W, for example 100 W, 250 W, 500 W, 750 W, or the like. Moreover, the $1/e^2$ beam diameter of the infrared laser beam may be about 20 mm or less, for example, 15 mm, 12 mm, 10 mm, 8 mm, 5 mm, 2 mm, or less. In operation, a larger $1/e^2$ beam diameter of the infrared laser beam may facilitate faster laser processing and more power while a smaller $1/e^2$ beam diameter of the infrared laser beam may facilitate high precision separation by limiting damage to portions of the transparent workpiece 160 near the contour 170. Example infrared lasers include a carbon dioxide laser (a "$CO_2$ laser"), a carbon monoxide laser (a "CO laser"), a solid state laser, a laser diode, or combinations thereof.

In other embodiments, stress present in the transparent workpiece 160, depending on the type, depth, and material properties (e.g., absorption, CTE, stress, composition, etc.) may cause spontaneous separation along the contour 170 without further heating or mechanical separation steps. For example, when the transparent workpiece 160 comprises a strengthened glass substrate (e.g., an ion-exchanged or thermally tempered glass substrate), the formation of the contour 170 may induce crack propagation along the contour 170 to separate the transparent workpiece 160.

Referring now to FIGS. 8A-10B example transparent workpieces 260, 360, 460 and resultant separated articles 260', 360', 460' formed from these transparent workpieces using the methods and systems described herein are schematically depicted. As one example, FIG. 8A depicts a schematic side view of a transparent workpiece 260 with a plurality of defects 272 each having a defect angle that is less than 80° relative to an impingement surface of the transparent workpiece 260. The plurality of defects 272 (i.e., a contour of these defects 272) may be separated to form one or more separated articles 260' each comprising an angled edge 261, as shown in FIG. 8B.

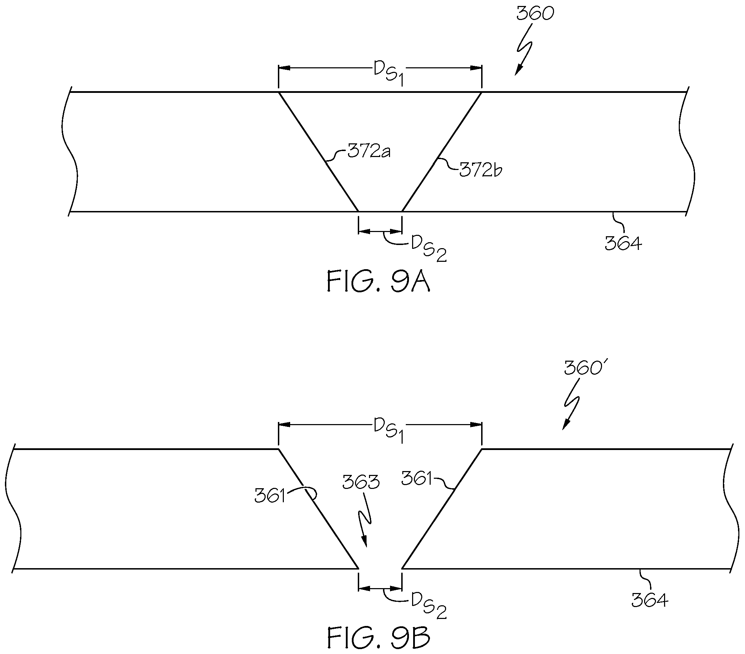

As another example, FIG. 9A depicts a schematic side view of a transparent workpiece 360 comprising a plurality of defects 372, including a first defect 372a and a second defect 372b. The plurality of defects 372 comprise a curved contour formed along a curved contour line. Both the first defect 372a and the second defect 372b extend radially inward, for example, from an impingement surface 362 (i.e., the top surface depicted in FIG. 9A) to an opposite surface 164 (i.e., the bottom surface depicted in FIG. 9B). Thus, at the impingement surface 362, the first defect 372a and the second defect 372b are spaced apart from one another by a first spacing distance $D_{S1}$ and at the opposite surface 364, the first defect 372a and the second defect 372b are spaced apart from one another by a second spacing distance $D_{S2}$, which is smaller than the first spacing distance Dsi. In embodiments in which the curved contour line is circular, the first spacing distance $D_{S1}$ is the diameter of the closed contour line at the impingement surface and the second spacing distance $D_{S2}$ is the diameter of the closed contour line at the opposite surface. As shown in FIG. 9B, the closed contour of defects 372 may be separated to form a separated article 360' having a conical hole 363 defined by an angled edge 361. For example, the closed contour of defects 372 may be separated to form the separated article 360' having the conical hole 363 using a chemical etching process. For example, the closed contour of defects 372 may be chemically etched with an etchant comprising 5% HF and 10% $HNO_3$. Without intending to be limited by theory, each of defect of the closed contour of defects 372 operate as a preferential path for the chemical etchant and thus facilitate faster chemical etching than merely chemically etching an unaltered surface of the transparent workpiece 360. As one example, conical holes 363 formed using the embodiments described herein may be used for liquid lenses.

Referring still to FIGS. 9A and 9B, the curved contour of defects 372 may be formed by rotating the laser beam 112 about the beam pathway 111 while translating the transparent workpiece 160 and the laser beam 112 relative to one another such that the defects 372 retain a radially inward directionality relative to the curved contour line along the curved contour. Further, it should be understood that while the defects 372 are depicted as being directed radially inward relative the curved contour line, in other embodiments, the defects 372 may be directed radially outward, for example, by rotation of the laser beam 112 about the beam pathway 111.

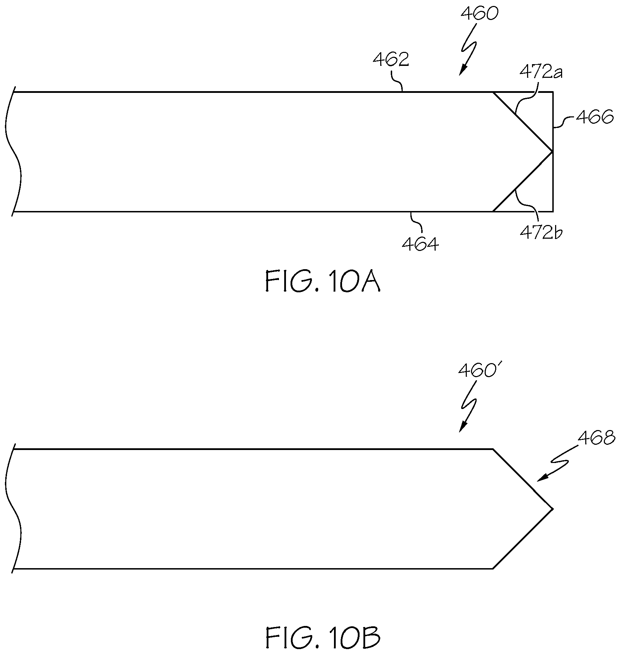

As another example, FIG. 10A depicts a schematic side view of a transparent workpiece 460 comprising a plurality of defects 472, including a first defect 472a and second defect 472b. The first defect 472a extends from an impingement surface 462 to an edge surface 466 of the transparent workpiece 160 and the second defect 472b extends from an opposite surface 464 to the edge surface 466. The first defect 472a may be formed by directing the laser beam focal line 113, at an angle, from the impingement surface 462 to the edge surface 466 and the second defect 472b may be formed by directing the laser beam focal line 113, at an angle, from the opposite surface 464 to the edge surface 466. Further, the first defect 472a may be part of a plurality of first defects 472a that from a first contour and the second defect 472b may be part of a plurality of second defects 472b that form a second contour. In operation, the first contour of first defects 472a and the second contour of second defects 472b may be separated using the embodiments describe herein to form a separated article 460' having beveled edge 468, as depicted in FIG. 10B.

For the purposes of describing and defining the present inventive technology, it is noted that reference herein to a variable being a "function" of a parameter or another variable is not intended to denote that the variable is exclusively a function of the listed parameter or variable. Rather, reference herein to a variable that is a "function" of a listed parameter is intended to be open ended such that the variable may be a function of a single parameter or a plurality of parameters.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the specific value or end-point referred to is included. Whether or not a numerical value or end-point of a range in the specification recites "about," two embodiments are described: one modified by "about," and one not modified by "about." It will be further understood that the endpoints of each of the ranges are significant both in relation to the other endpoint, and independently of the other endpoint.

Directional terms as used herein- for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

It will be apparent to those skilled in the art that various modifications and variations can be made to the embodiments described herein without departing from the scope of the claimed subject matter. Thus it is intended that the specification cover the modifications and variations of the various embodiments described herein provided such modification and variations come within the scope of the appended claims.

**Claims**

1. A method for processing a transparent workpiece (160), the method comprising:
directing a laser beam (112) oriented along a beam pathway (111) and output by a beam source (110) through an aspheric optical element (120) and into an impingement surface (162) of the transparent workpiece (160), wherein:

   the laser beam (112) impinges the aspheric optical element (120) radially offset from a centerline axis (122) of the aspheric optical element (120) by an offset distance of 30% the $1/e^2$ diameter of the laser beam (112) or greater;
   the laser beam (112) downstream the aspheric optical element (120) comprises non-uniform radial intensity;
   the beam pathway (111) and the transparent workpiece (160) are tilted relative to one another such that the beam pathway (111) comprises a beam pathway angle ($\theta_{Bpath}$) of less than 90° relative to the impingement surface (162) at the impingement surface (162); and
   a portion of the laser beam (112) directed into the transparent workpiece (160) comprises a laser beam focal line (113) and generates an induced absorption to produce a defect (172) within the transparent workpiece (160), the laser beam focal line (113) comprising:

   a wavelength $\lambda$;
   a spot size $w_o$;
   a Rayleigh range $Z_R$ that is greater than $F_D\,\dfrac{\pi w_o^2}{\lambda}$, where $F_D$ is a dimensionless divergence factor comprising a value of 10 or greater; and
   an internal focal line angle of less than 80° relative to the impingement surface (162), such that the defect (172) comprises a defect angle within the transparent workpiece (160) of less than 80° relative to the impingement surface (162).

2. The method of claim 1, wherein the laser beam (112) impinges the aspheric optical element (120) radially offset from the centerline axis (122) of the aspheric optical element (120) by an offset distance of 75% the $1/e^2$ diameter of the laser beam (112) or greater.

3. The method of claim 1 or claim 2, wherein a portion of the laser beam (112) comprising a majority of the intensity of the laser beam (112) impinges the impingement surface (162) at one or more ray propagation angles ($\theta_{Bprop}$) each more than the beam pathway angle ($\theta_{Bpath}$).

4. The method of any of the previous claims, wherein the internal focal line angle is from less than 80° to 50°.

5. The method of any of claims 1-4, further comprising translating at least one of the transparent workpiece (160) and the laser beam (112) relative to each other along a contour line (165) to form a contour (170) comprising a plurality of defects (172).

6. The method of claim 5, wherein the laser beam focal line (113) extends from the impingement surface (162) of the transparent workpiece (160) to an edge surface (166) of the transparent workpiece (160) such that the plurality of defects (172) each extend from the impingement surface (162) of the transparent workpiece (160) to the edge surface (166) of the transparent workpiece (160).

7. The method of claim 5 or claim 6, wherein the contour line (165) comprises a curved contour line, the contour (170) comprises a curved contour, and the method further comprises rotating the laser beam (112) while translating at least one of the transparent workpiece (160) and the laser beam (112) relative to each other along the curved contour line such that each defect (172) of the plurality of defects (172) is directed radially inward or radially outward relative the curved contour line.

8. A method for processing a transparent workpiece (160), the method comprising:
directing a laser beam (112) oriented along a beam pathway (111) and output by a beam source (110) through a multi-optic axicon assembly (140) comprising a frustum optical element (142) and a lens axicon (150) and into an impingement surface (162) of the transparent workpiece (160), wherein:

the lens axicon (150) is positioned downstream the frustum optical element (142); and

the beam pathway (111) and the transparent workpiece (160) are tilted relative to one another such that the beam pathway (111) comprises a beam pathway angle ($\theta_{Bpath}$) of less than 90° relative to the impingement surface (162) at the impingement surface (162); and

a portion of the laser beam (112) directed into the transparent workpiece (160) comprises a laser beam focal line (113) and generates an induced absorption to produce a defect (172) within the transparent workpiece (160), the laser beam focal line (113) comprising:

a wavelength $\lambda$;

a spot size $w_o$;

a Rayleigh range $Z_R$ that is greater than $F_D \dfrac{\pi w_o^2}{\lambda}$, where $F_D$ is a dimensionless divergence factor comprising a value of 10 or greater; and

an internal focal line angle of less than 80° relative to the impingement surface (162), such that the defect (172) comprises a defect angle within the transparent workpiece (160) of less than 80° relative to the impingement surface (162).

9. The method of claim 8, wherein the lens axicon (150) comprises a negative spherical aberrated phase.

10. The method of claim 8 or claim 9, wherein:

the lens axicon (150) comprises an input surface having a central convex reflector (153) and an output surface (154) having a reflective convex aperture;

the central convex reflector (153) comprises an obscuration diameter; and

the reflective convex aperture (155) comprises a reflective ring (156) surrounding a central aperture (158) having an aperture diameter.

11. The method of any of claims 8-10, wherein the frustum optical element (142) comprises:

an input surface (144) comprising an input surface diameter;

an output surface (146) comprising an output surface diameter that is greater than the input surface diameter;

an outer surface (145) extending from the input surface (144) to the output surface (146); and

a reflective cone (148) extending into the output surface (146); wherein:

the reflective cone (148) comprises a reflective cone surface (149) parallel with the outer surface (145) of the frustum optical element (142);

the reflective cone (148) comprises a base diameter; and

a diameter of the laser beam (112) upstream the frustum optical element (142) is less than or equal to the base diameter of the reflective cone (148) of the frustum optical element (142).

12. The method of any of claims 8-11, wherein the multi-optic axicon assembly (140) further comprises a split quarter waveplate (180) positioned between the frustum optical element (142) and the lens axicon (150).

13. The method of any of claims 8-12, further comprising translating at least one of the transparent workpiece (160) and the laser beam (112) relative to each other along a contour line (165) to form a contour (170) comprising a plurality of defects (172).

14. The method of claim 13, wherein the laser beam focal line (113) extends from the impingement surface (162) of the transparent workpiece (160) to an edge surface (166) of the transparent workpiece (160) such that the plurality of defects (172) each extend from the impingement surface (162) of the transparent workpiece (160) to the edge surface (166) of the transparent workpiece (160).

15. The method of claim 13 or claim 14, wherein the contour line (165) comprises a curved contour line, the contour (170) includes a curved contour, and the method further including rotating the laser beam (112) while translating at least one of the transparent workpiece (160) and the laser beam (112) relative to each other along the curved contour line such that each defect (172) of the plurality of defects (172) is directed radially inward or radially outward relative the curved contour line.

**Patentansprüche**

1.  Verfahren zum Verarbeiten eines transparenten Werkstücks (160), wobei das Verfahren aufweist:
    Richten eines Laserstrahls (112), orientiert entlang eines Strahlwegs (111) und ausgegeben von einer Strahlquelle (110), durch ein asphärisches optisches Element (120) und in eine Auftrefffläche (162) des transparenten Werkstücks (160), wobei:

    der Laserstrahl (112) auf das asphärische optische Element (120) radial von einer Mittellinienachse (122) des asphärischen optischen Elements (120) um eine Offsetdistanz von 30 % des I/e$^2$ Durchmessers des Laserstrahls (112) oder größer versetzt auftrifft;
    der Laserstrahl (112) flussabwärts von dem asphärischen optischen Element (120) eine ungleichmäßige radiale Intensität aufweist;
    der Strahlweg (111) und das transparente Werkstück (160) relativ zueinander derart verkippt sind, dass der Strahlweg (111) an der Auftrefffläche (162) einen Strahlwegwinkel ($\theta_{Bpath}$) von weniger als 90° relativ zu der Auftrefffläche (162) aufweist; und
    ein Anteil des Laserstrahls (112), der in das transparente Werkstück (160) gerichtet ist, eine Laserstrahlfokallinie (113) aufweist und eine induzierte Absorption erzeugt, um einen Defekt (172) innerhalb des transparenten Werkstücks (160) zu produzieren, wobei die Laserstrahlfokallinie (113) Folgendes aufweist:

    eine Wellenlänge A;
    eine Fleckgröße $w_0$;

    eine Rayleigh-Länge $Z_R$, die größer als $F_D \dfrac{\pi w_0^2}{\lambda}$ ist, wobei $F_D$ ein dimensionsloser Divergenzfaktor ist, der einen Wert von 10 oder größer umfasst; und
    einen inneren Fokallinienwinkel von weniger als 80° relativ zu der Auftrefffläche (162), so dass der Defekt (172) einen Defektwinkel innerhalb des transparenten Werkstücks (160) von weniger als 80° relativ zu der Auftrefffläche (162) aufweist.

2.  Verfahren nach Anspruch 1, wobei der Laserstrahl (112) auf das asphärische optische Element (120) radial von einer Mittellinienachse (122) des asphärischen optischen Elements (120) um eine Offsetdistanz von 75 % des I/e$^2$ Durchmessers des Laserstrahls (112) oder größer versetzt auftrifft.

3.  Verfahren nach Anspruch 1 oder Anspruch 2, wobei ein Anteil des Laserstrahls (112), der eine Mehrheit der Intensität des Laserstrahls (112) aufweist, unter einem oder mehreren Einzelstrahlfortpflanzungswinkeln ($\theta_{Bprop}$), jeweils größer als der Strahlwegwinkel ($\theta_{Bpath}$), auf die Auftrefffläche (162) auftrifft.

4.  Verfahren nach einem der vorhergehenden Ansprüche, wobei der innere Fokallinienwinkel von weniger als 80° zu 50° reicht.

5.  Verfahren nach einem der Ansprüche 1-4, ferner aufweisend Translatieren des transparenten Werkstücks (160) und/oder des Laserstrahls (112) relativ zueinander entlang einer Konturlinie (165), um eine Kontur (170) zu bilden, die eine Vielzahl von Defekten (172) aufweist.

6.  Verfahren nach Anspruch 5, wobei sich die Laserstrahlfokallinie (113) von der Auftrefffläche (162) des transparenten Werkstücks (160) zu einer Randfläche (166) des transparenten Werkstücks (160) erstreckt, so dass sich die Vielzahl von Defekten (172) jeweils von der Auftrefffläche (162) des transparenten Werkstücks (160) zu der Randfläche (166) des transparenten Werkstücks (160) erstreckt.

7.  Verfahren nach Anspruch 5 oder Anspruch 6, wobei die Konturlinie (165) eine gekrümmte Konturlinie aufweist, die Kontur (170) eine gekrümmte Kontur aufweist, und wobei das Verfahren ferner Rotieren des Laserstrahls (112), während des Translatierens des transparenten Werkstücks (160) und/oder des Laserstrahls (112) relativ zueinander entlang der gekrümmten Konturlinie, aufweist, so dass jeder Defekt (172) aus der Vielzahl von Defekten (172) relativ zu der gekrümmten Konturlinie radial nach innen oder radial nach außen gerichtet ist.

8. Verfahren zum Verarbeiten eines transparenten Werkstücks (160), wobei das Verfahren aufweist:
Richten eines Laserstrahls (112), orientiert entlang eines Strahlwegs (111) und ausgegeben von einer Strahlquelle (110), durch eine Multi-Optoaxicon-Baugruppe (140), aufweisend ein optisches Stumpfelement (142) und ein Linsenaxicon (150), und in eine Auftrefffläche (162) des transparenten Werkstücks (160), wobei:

das Linsenaxicon (150) ist flussabwärts von dem optischen Stumpfelement (142) positioniert; und
der Strahlweg (111) und das transparente Werkstück (160) sind relativ zueinander verkippt, so dass der Strahlweg (111) an der Auftrefffläche (162) einen Strahlwegwinkel ($\theta_{Bpath}$) von weniger als 90° relativ zu der Auftrefffläche (162) aufweist; und
ein Anteil des Laserstrahls (112), der in das transparente Werkstück (160) gerichtet ist, eine Laserstrahlfokallinie (113) aufweist und eine induzierte Absorption erzeugt, um einen Defekt (172) innerhalb des transparenten Werkstücks (160) zu produzieren, wobei die Laserstrahlfokallinie (113) Folgendes aufweist:

eine Wellenlänge A;
eine Fleckgröße $w_0$;

eine Rayleigh-Länge $Z_R$, die größer als $F_D \ \dfrac{\pi w_0^2}{\lambda}$ ist, wobei $F_D$ ein dimensionsloser Divergenzfaktor ist, der einen Wert von 10 oder größer umfasst; und
einen inneren Fokallinienwinkel von weniger als 80° relativ zu der Auftrefffläche (162), so dass der Defekt (172) einen Defektwinkel innerhalb des transparenten Werkstücks (160) von weniger als 80° relativ zu der Auftrefffläche (162) aufweist.

9. Verfahren nach Anspruch 8, wobei das Linsenaxicon (150) eine negative sphärischaberrierte Phase aufweist.

10. Verfahren nach Anspruch 8 oder Anspruch 9, wobei:

das Linsenaxicon (150) eine Eingangsfläche aufweist, die einen zentralen konvexen Reflektor (153) aufweist, und eine Ausgangsfläche (154), die eine reflektierende konvexe Apertur aufweist;
wobei der zentrale konvexe Reflektor (153) einen Obskurierungsdurchmesser aufweist; und
die reflektierende konvexe Apertur (155) einen reflektierenden Ring (156), der eine zentrale Apertur (158), die einen Aperturdurchmesser aufweist, umgibt, aufweist.

11. Verfahren nach einem der Ansprüche 8-10, wobei das optische Stumpfelement (142) Folgendes umfasst:

eine Eingangsfläche (144), aufweisend einen Eingangsflächendurchmesser;
eine Ausgangsfläche (146), aufweisend einen Ausgangsflächendurchmesser, der größer als der Eingangsflächendurchmesser ist;
eine Außenfläche (145), die sich von der Eingangsfläche (144) zu der Ausgangsfläche (146) erstreckt; und
einen reflektierenden Konus (148), der sich in die Ausgangsfläche (146) erstreckt; wobei:

der reflektierende Konus (148) eine reflektierende Konusfläche (149), parallel zu der Außenfläche (145) des optischen Stumpfelements (142), aufweist;
der reflektierende Konus (148) weist einen Basisdurchmesser auf; und
ein Durchmesser des Laserstrahls (112) flussaufwärts von dem optischen Stumpfelement (142) ist kleiner oder gleich dem Basisdurchmesser des reflektierenden Konus (148) des optischen Stumpfelements (142).

12. Verfahren nach einem der Ansprüche 8-11, wobei die Multi-Optoaxicon-Baugruppe (140) ferner eine geteilte Viertelwellenlängenplatte (180) aufweist, die zwischen dem optischen Stumpfelement (142) und dem Linsenaxicon (150) positioniert ist.

13. Verfahren nach einem der Ansprüche 8-12, ferner aufweisend Translatieren des transparenten Werkstücks (160) und/oder des Laserstrahls (112) relativ zueinander entlang einer Konturlinie (165), um eine Kontur (170) zu bilden, die eine Vielzahl von Defekten (172) aufweist.

14. Verfahren nach Anspruch 13, wobei sich die Laserstrahlfokallinie (113) von der Auftrefffläche (162) des transparenten Werkstücks (160) zu einer Randfläche (166) des transparenten Werkstücks (160) erstreckt, so dass sich die Vielzahl von Defekten (172) jeweils von der Auftrefffläche (162) des transparenten Werkstücks (160) zu der Randfläche (166) des transparenten Werkstücks (160) erstreckt.

15. Verfahren nach Anspruch 13 oder Anspruch 14, wobei die Konturlinie (165) eine gekrümmte Konturlinie aufweist, die Kontur (170) eine gekrümmte Kontur beinhaltet, und wobei das Verfahren ferner Rotieren des Laserstrahls (112), während des Translatierens des transparenten Werkstücks (160) und/oder des Laserstrahls (112) relativ zueinander entlang der gekrümmten Konturlinie, beinhaltet, so dass jeder Defekt (172) aus der Vielzahl von Defekten (172) relativ zu der gekrümmten Konturlinie radial nach innen oder radial nach außen gerichtet ist.

**Revendications**

1. Procédé pour traiter une pièce à travailler transparente (160), ce procédé comprenant :
   l'action de diriger un faisceau laser (112) orienté le long d'une trajectoire de faisceau (111) et fourni par une source de faisceau (110) à travers un élément optique asphérique (120) et dans une surface d'impact (162) de la pièce à travailler transparente (160),

   le faisceau laser (112) heurtant l'élément optique asphérique (120) d'une manière décalée radialement par rapport à l'axe central (122) de l'élément optique asphérique (120) d'une distance de décalage de 30 % du $1/e^2$ diamètre du faisceau laser (112) ou plus grande ;
   le faisceau laser (112) en aval de l'élément optique asphérique (120) comportant une intensité radiale non uniforme ;
   la trajectoire du faisceau (111) et la pièce à travailler transparente (160) étant inclinées l'une par rapport à l'autre de manière à ce que la trajectoire du faisceau (111) comporte un angle de trajectoire de faisceau ($\theta_{Bpath}$) de pas moins que 90° par rapport à la surface d'impact (162) au niveau de la surface d'impact (162) ; et
   une partie du faisceau laser (112) dirigée dans la pièce à travailler transparente (160) comportant une ligne focale de faisceau laser (113) et générant une absorption induite afin de produire un défaut (172) à l'intérieur de la pièce à travailler transparente (160), la ligne focale du faisceau laser (113) comportant :

   une longueur d'onde X ;
   une taille de point $w_o$;

   une portée de Rayleigh $Z_R$ qui est plus grande que $F_D \dfrac{\pi w_0^2}{\lambda}$ , $F_D$ étant un facteur de divergence adimensionnel comportant une valeur de 10 ou plus ; et
   un angle de ligne focale interne de moins que 80° par rapport à la surface d'impact (162), de telle sorte que le défaut (172) comporte un angle de défaut à l'intérieur de la pièce à travailler transparente (160) de moins que 80° par rapport à la surface d'impact (162).

2. Procédé selon la revendication 1, dans lequel le faisceau laser (112) frappe l'élément optique asphérique (120) d'une manière décalée radialement par rapport à l'axe central (122) de l'élément optique asphérique (120) d'une distance de décalage de 75 % du $1/e^2$ diamètre du faisceau laser (112) ou plus grande.

3. Procédé selon la revendication 1 ou la revendication 2, dans lequel une partie du faisceau laser (112) comportant une majorité de l'intensité du faisceau laser (112) frappe la surface d'impact (162) à un ou plusieurs angles de propagation de rayons ($\theta_{Bprop}$), chacun étant plus grand que l'angle de la trajectoire du faisceau ($\theta_{Bpath}$).

4. Procédé selon l'une quelconque des revendications précédentes, dans lequel l'angle de la ligne focale interne est situé depuis moins que 80° jusqu'à 50°.

5. Procédé selon l'une quelconque des revendications 1 à 4, comprenant en outre la translation d'au moins soit la pièce à travailler transparente (160), soit le faisceau laser (112) l'une par rapport à l'autre le long d'une ligne de contour (165) afin de former un contour (170) comportant une pluralité de défauts (172).

6. Procédé selon la revendication 5, dans lequel la ligne focale du faisceau laser (113) s'étend depuis la surface d'impact (162) de la pièce à travailler transparente (160) jusqu'à une surface de bord (166) de la pièce à travailler transparente (160) de telle sorte que la pluralité de défauts (172) s'étendent chacun depuis la surface d'impact (162) de la pièce à travailler transparente (160) jusqu'à la surface du bord (166) de la pièce à travailler transparente (160).

7.  Procédé selon la revendication 5 ou la revendication 6, dans lequel la ligne de contour (165) comporte une ligne de contour courbe, le contour (170) comporte un contour courbe, et ce procédé comprenant en outre la rotation du faisceau laser (112) lors de la translation d'au moins soit la pièce à travailler transparente (160), soit le faisceau laser (112) l'une par rapport à l'autre le long de la ligne de contour courbe de telle sorte que chaque défaut (172) de la pluralité de défauts (172) est dirigé radialement vers l'intérieur ou radialement vers l'extérieur par rapport à la ligne de contour courbe.

8.  Procédé pour traiter une pièce à travailler transparente (160), ce procédé comprenant :
    l'action de diriger un faisceau laser (112) orienté le long d'une trajectoire de faisceau (111) et fourni par une source de faisceau (110) à travers un ensemble axicon multi-optique (140) comportant un élément optique tronconique (142) et un axicon de lentille (150) et dans une surface d'impact (162) de la pièce à travailler transparente (160),

    l'axicon de lentille (150) étant positionné en aval de l'élément optique tronconique (142) ; et
    la trajectoire du faisceau (111) et la pièce à travailler transparente (160) étant inclinées l'une par rapport à l'autre de manière à ce que la trajectoire du faisceau (111) comporte un angle de trajectoire de faisceau ($\theta_{Bpath}$) de moins que 90° par rapport à la surface d'impact (162) au niveau de la surface d'impact (162) ; et
    une partie du faisceau laser (112) dirigée dans la pièce à travailler transparente (160) comportant une ligne focale de faisceau laser (113) et générant une absorption induite afin de produire un défaut (172) à l'intérieur de la pièce à travailler transparente (160), la ligne focale du faisceau laser (113) comportant :

    une longueur d'onde X ;
    une taille de point $w_o$ ;

    une portée de Rayleigh $Z_R$ qui est plus grande que $F_D \dfrac{\pi w_0^2}{\lambda}$ , $F_D$ étant un facteur de divergence adimensionnel comportant une valeur de 10 ou plus ; et
    un angle de ligne focale interne de moins que 80° par rapport à la surface d'impact (162), de telle sorte que le défaut (172) comporte un angle de défaut à l'intérieur de la pièce à travailler transparente (160) de moins que 80° par rapport à la surface d'impact (162).

9.  Procédé selon la revendication 8, dans lequel l'axicon de lentille (150) comporte une phase aberrée sphérique négative.

10. Procédé selon la revendication 8 ou la revendication 9, dans lequel :

    l'axicon de lentille (150) comporte une surface d'entrée ayant un réflecteur convexe central (153) et une surface de sortie (154) ayant une ouverture convexe réfléchissante ;
    le réflecteur convexe central (153) comporte un diamètre d'obscuration ; et
    l'ouverture convexe réfléchissante (155) comporte un anneau réfléchissant (156) entourant une ouverture centrale (158) ayant un diamètre d'ouverture.

11. Procédé selon l'une quelconque des revendications 8 à 10, dans lequel l'élément optique tronconique (142) comporte :

    une surface d'entrée (144) comportant un diamètre de surface d'entrée ;
    une surface de sortie (146) comportant un diamètre de surface de sortie qui est plus grand que le diamètre de la surface d'entrée ;
    une surface extérieure (145) s'étendant depuis la surface d'entrée (144) jusqu'à la surface de sortie (146) ; et
    un cône réfléchissant (148) s'étendant dans la surface de sortie (146) ;
    le cône réfléchissant (148) comportant une surface de cône réfléchissant (149) parallèle à la surface extérieure (145) de l'élément optique tronconique (142) ;
    le cône réfléchissant (148) comportant un diamètre de base ; et
    un diamètre du faisceau laser (112) en amont de l'élément optique tronconique (142) étant plus petit que ou égal au diamètre de la base du cône réfléchissant (148) de l'élément optique tronconique (142).

12. Procédé selon l'une quelconque des revendications 8 à 11, dans lequel l'ensemble axicon multi-optique (140) comporte en outre une lame quart d'onde fendue (180) positionnée entre l'élément optique tronconique (142) et l'axicon de lentille (150).

13. Procédé selon l'une quelconque des revendications 8 à 12, comprenant en outre la translation d'au moins soit la pièce à travailler transparente (160), soit le faisceau laser (112) l'une par rapport à l'autre le long d'une ligne de contour (165) afin de former un contour (170) comportant une pluralité de défauts (172).

14. Procédé selon la revendication 13, dans lequel la ligne focale du faisceau laser (113) s'étend depuis la surface d'impact (162) de la pièce à travailler transparente (160) jusqu'à une surface de bord (166) de la pièce à travailler transparente (160) de telle sorte que la pluralité de défauts (172) s'étendent chacun depuis la surface d'impact (162) de la pièce à travailler transparente (160) jusqu'à la surface du bord (166) de la pièce à travailler transparente (160).

15. Procédé selon la revendication 13 ou la revendication 14, dans lequel la ligne de contour (165) comporte une ligne de contour courbe, le contour (170) comporte un contour courbe, et ce procédé comprenant en outre la rotation du faisceau laser (112) lors de la translation d'au moins soit la pièce à travailler transparente (160), soit le faisceau laser (112) l'une par rapport à l'autre le long de la ligne de contour courbe de telle sorte que chaque défaut (172) de la pluralité de défauts (172) est dirigé radialement vers l'intérieur ou radialement vers l'extérieur par rapport à la ligne de contour courbe.

FIG. 1A

FIG. 1B

EP 4 210 897 B1

FIG. 2A

EP 4 210 897 B1

FIG. 2B

FIG. 2C

FIG. 2D

FIG. 2E

FIG. 2F

FIG. 2G

FIG. 2H

FIG. 21

FIG. 3A

BEAM PROPAGATION DIRECTION

FIG. 3B

FIG. 3C

FIG. 3D

FIG. 3E

FIG. 3F

FIG. 3G

FIG. 3H

FIG. 31

BEAM PROPAGATION DIRECTION

FIG. 4A

EP 4 210 897 B1

EP 4 210 897 B1

142

$D_{FO}$

148

$D_{FI}$

$D_{FC}$

143

144

149

146

145

BEAM PROPAGATION DIRECTION

150

140

$D_O$

151

153

158

156

152

155

154

$D_A$

FIG. 4B

FIG. 4C

FIG. 5A

FIG. 5B

FIG. 5D

FIG. 5C

FIG. 5F

FIG. 5E

FIG. 5G

FIG. 5H

FIG. 6A

FIG. 6B

FIG. 7B

FIG. 7A

FIG. 8A

FIG. 8B

FIG. 9A

FIG. 9B

460

462

472a

466

464

472b

FIG. 10A

460'

468

FIG. 10B

EP 4 210 897 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63076031
- US 20180134604 A1
- US 10730783 B2
- US 62402337